(19) Europäisches Patentamt / European Patent Office / Office européen des brevets

(11) **EP 4 429 331 A1**

(12) **EUROPEAN PATENT APPLICATION**
published in accordance with Art. 153(4) EPC

(43) Date of publication:
**11.09.2024 Bulletin 2024/37**

(21) Application number: **22903410.3**

(22) Date of filing: **05.12.2022**

(51) International Patent Classification (IPC):
**H04W 52/02** (2009.01)

(52) Cooperative Patent Classification (CPC):
**H04L 27/00; H04W 52/02; H04W 56/00;**
**Y02D 30/70**

(86) International application number:
**PCT/CN2022/136678**

(87) International publication number:
**WO 2023/103988 (15.06.2023 Gazette 2023/24)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **06.12.2021 CN 202111480752**
**14.01.2022 CN 202210044924**

(71) Applicant: **Huawei Technologies Co., Ltd.**
**Shenzhen, Guangdong 518129 (CN)**

(72) Inventor: **LI, Qiang**
**Shenzhen, Guangdong 518129 (CN)**

(74) Representative: **Isarpatent**
**Patent- und Rechtsanwälte**
**Barth Hassa Peckmann & Partner mbB**
**Friedrichstraße 31**
**80801 München (DE)**

(54) **COMMUNICATION METHOD AND APPARATUS**

(57) This application provides a communication method and apparatus, and relates to the field of communication technologies, to ensure synchronization performance of a device in a sleep state. The method includes: A first device determines a first signal, and sends the first signal. The first signal includes a first synchronization signal and N reference frequency signals, and each reference frequency signal is a signal of a single frequency. In this case, if the first signal is demodulated based on a local oscillator, each reference frequency signal may generate a frequency offset close to that of the first synchronization signal, thereby eliminating the frequency offset of the first synchronization signal. In this way, the device performs a correlation operation by using a synchronization signal without a frequency offset, so that a time domain position of a correlation peak can be accurately determined, thereby completing device synchronization, and ensuring the synchronization performance of the device in the sleep state. Solutions of this application may be widely applied to the fields such as communication technologies, artificial intelligence, internet of vehicles, and internet of smart home things.

FIG. 9

**Description**

This application claims priority to Chinese Patent Application No. 202111480752.9, filed with the China National Intellectual Property Administration on December 6, 2021 and entitled "WAKE-UP SIGNAL SYNCHRONIZATION METHOD", and claims priority to Chinese Patent Application No. 202210044924.6, filed with the China National Intellectual Property Administration on January 14, 2022 and entitled "COMMUNICATION METHOD AND APPARATUS", both of which are incorporated herein by reference in their entireties.

**TECHNICAL FIELD**

This application relates to the communication field, and in particular, to a communication method and apparatus.

**BACKGROUND**

In a new radio (new radio, NR) system, when there is no data service, a terminal may enter a sleep state, for example, an idle (idle) state, to reduce power consumption of the terminal and save power. In this case, the terminal and a base station may exchange a signal with each other over a wake-up radio (wake-up radio, WUR) link. For example, the base station may send a synchronization signal to the terminal over the WUR link, to implement synchronization between the terminal and the base station. When there is a data service subsequently, the base station may send a wake-up signal to the terminal over the WUR link, to indicate the terminal to resume from the sleep state to a working state, for example, a connected (connected) state, to complete receiving and sending of the data service.

It may be understood that the terminal needs to maintain low power consumption in the sleep state, and in this case, the terminal usually demodulates the synchronization signal by using a local oscillator with low power consumption. However, performance of the local oscillator is limited, and a demodulated signal usually has a frequency offset. When the terminal performs a correlation operation by using the signal that has the frequency offset, it is difficult to determine a time domain position of a correlation peak. Consequently, device synchronization cannot be completed, and synchronization performance of the terminal in the sleep state is affected.

**SUMMARY**

Embodiments of this application provide a communication method and apparatus, to ensure synchronization performance of a device in a sleep state.

The following technical solutions are used in this application.

According to a first aspect, a communication method is provided. The method includes: A first device determines a first signal, and sends the first signal. The first signal is carried on a first time-frequency resource, and the first signal includes a first synchronization signal and N reference frequency signals, where N is a positive integer. Time domain positions of the first synchronization signal and the N reference frequency signals are different, and each of the N reference frequency signals is a signal of a single frequency.

It can be learned from the method according to the first aspect that the first signal includes the first synchronization signal and the N reference frequency signals, and each reference frequency signal is the signal of the single frequency. In this case, if the first signal is demodulated based on a local oscillator, each reference frequency signal may generate a frequency offset close to that of the first synchronization signal, thereby eliminating the frequency offset of the first synchronization signal. In this way, a device performs a correlation operation by using a synchronization signal without a frequency offset, so that a time domain position of a correlation peak can be accurately determined, thereby completing device synchronization, and ensuring synchronization performance of the device in a sleep state.

In a possible design solution, at least two of the N reference frequency signals are located at different frequency domain positions, for example, located at consecutive or non-consecutive frequency domain positions. In other words, the at least two reference frequency signals have different frequencies. Generally, a frequency response of a radio channel is not always flat and fluctuates with an environment. When fading occurs at a frequency, for example, deep fading (deep fading for short) occurs, it is difficult to eliminate the frequency offset of the first synchronization signal by using a reference frequency signal at a deep fading frequency. Consequently, it is difficult to determine the time domain position of the correlation peak, and the synchronization performance of the device in the sleep state cannot be ensured. However, the at least two reference frequency signals are located at different frequencies, and a possibility for deep fading to occur at these frequencies is low. A frequency offset of a reference frequency signal at a non-deep fading frequency may be used to eliminate the frequency offset of the first synchronization signal and complete the device synchronization, to further ensure the synchronization performance of the device in the sleep state, provided that deep fading does not occur at one frequency. This is also called frequency diversity gain. Two reference frequency signals are used as an example. A reference frequency signal 1 is located at a frequency 1, and a reference frequency signal 2 is located at a frequency 2. If deep fading occurs on the frequency 1, a frequency offset of the reference frequency signal 2 on the frequency 2 may be used to eliminate the frequency offset of the first synchronization signal, to complete the device synchronization. Similarly, if deep fading occurs on the frequency 2, a frequency offset of the reference frequency signal 1 on the frequency 1 may be used to eliminate the frequency offset of the first synchronization signal, to complete the device synchronization.

Optionally, at least two of the N reference frequency signals are located at a same time domain position. In this way, time domain resources can be saved, and resource utilization and communication efficiency can be improved. The at least two reference frequency signals generate frequency offsets closer to the frequency offset of the first synchronization signal, to eliminate the frequency offset of the first synchronization signal as much as possible, and further ensure the synchronization performance of the device in the sleep state. Alternatively, at least two of the N reference frequency signals are located at different time domain positions. In this way, in a demodulation process, the device can separately receive each reference frequency signal, to avoid interference from another reference frequency signal, thereby eliminating the frequency offset of the first synchronization signal as much as possible, and further ensuring the synchronization performance of the device in the sleep state.

Further, at least two of the N reference frequency signals are located at consecutive time domain positions. For example, some reference frequency signals in the N reference frequency signals are located at consecutive time domain positions, and the other reference frequency signals are respectively located at inconsecutive time domain positions. That is, there are time domain intervals among the other reference frequency signals. For another example, the N reference frequency signals are located at consecutive time domain positions, that is, time domain positions of two adjacent reference frequency signals in the N reference frequency signals are consecutive. In this way, sending the at least two reference frequency signals at consecutive time domain positions can ensure that the at least two reference frequency signals can generate frequency offsets that are closer to each other in a demodulation process as much as possible, to eliminate the frequency offset of the first synchronization signal as much as possible, and ensure the synchronization performance of the device in the sleep state as much as possible.

In a possible design solution, an i$^{th}$ reference frequency signal in the N reference frequency signals is $e^{j2\pi f_i t}$, where i is any integer ranging from 1 to N, $f_i$ is a frequency of the i$^{th}$ reference frequency signal, $0 < t \le T_{sym}$, and $T_{sym}$ is duration of the i$^{th}$ reference frequency signal. In other words, the i$^{th}$ reference frequency signal is a signal of a single frequency whose frequency is $f_i$, to facilitate subsequent elimination of a frequency offset.

In a possible design solution, after the first device sends the first signal, the method according to the first aspect further includes: The first device sends a wake-up signal, where data in the wake-up signal is carried in a combination of on states or off states of resource units in a resource unit set, and the resource unit set belongs to the first time-frequency resource. It may be understood that, carrying the data based on the combination of the on states or the off states of the resource units may implement resource multiplexing, thereby improving communication efficiency and spectral efficiency.

Optionally, the resource unit occupies at least one orthogonal frequency division multiplexing OFDM symbol in time, and the resource unit occupies at least one OFDM subcarrier in frequency. In other words, a granularity of the resource unit may be selected in a targeted manner based on an actual scenario. For example, the resource unit may be a resource element RE or a resource block RB, to ensure that the resource unit is applicable to the actual scenario.

According to a second aspect, a communication method is provided. The method includes: A second device receives a first signal, and parses the first signal. The first signal is carried on a first time-frequency resource, and the first signal includes a first synchronization signal and N reference frequency signals, where N is an integer. Time domain positions of the first synchronization signal and the N reference frequency signals are different, and each of the N reference frequency signals is a signal of a single frequency.

In a possible design solution, at least two of the N reference frequency signals are located at different frequency domain positions.

Optionally, at least two of the N reference frequency signals are located at a same time domain position. Alternatively, at least two of the N reference frequency signals are located at different time domain positions.

Further, at least two of the N reference frequency signals are located at consecutive time domain positions.

In a possible design solution, an i$^{th}$ reference frequency signal in the N reference frequency signals is $e^{j2\pi f_i t}$, where i is any integer ranging from 1 to N, $f_i$ is a frequency of the i$^{th}$ reference frequency signal, $0 < t \le T_{sym}$, and $T_{sym}$ is duration of the i$^{th}$ reference frequency signal.

In a possible design solution, that the second device parses the first signal includes: The second device demodulates the first signal to obtain a synchronization sequence having a frequency offset and N reference frequency sequences having frequency offsets. In this way, the second device determines a time domain position of a correlation peak based on the synchronization sequence having the frequency offset, the N reference frequency sequences having the frequency offsets, a first synchronization sequence, and N reference frequency sequences. For example, the second device may first eliminate a frequency offset based on the synchronization sequence having the frequency offset and the N reference frequency sequences having the frequency offsets, and then accurately determine the time domain position of the correlation peak based on the first synchronization sequence and the N reference frequency sequences. The synchronization sequence having the frequency offset is a sequence obtained after down-conversion and sampling are performed on the first synchronization signal. An ith reference frequency sequence having a frequency offset in the N reference frequency sequences having the frequency offsets is a sequence obtained after down-conversion and sampling are performed on the ith reference frequency signal in the N reference frequency signals, where i is any integer ranging from 1 to N. The first synchronization sequence is used to obtain the first synchronization signal through modulation, and the N reference frequency sequences are used to obtain the N reference frequency signals through modulation.

Optionally, that the second device determines a time domain position of a correlation peak based on the synchronization sequence having the frequency offset, the N reference frequency sequences having the frequency offsets, a first synchronization sequence, and N reference frequency sequences includes: The second device multiplies the synchronization sequence having the frequency offset by a conjugate transpose of the ith reference frequency sequence having the frequency offset, to obtain an ith conjugate transpose sequence; and performs a correlation operation on the ith conjugate transpose sequence, the first synchronization sequence, and an ith reference frequency sequence, to determine the time domain position of the correlation peak.

It should be noted that a conjugate transpose multiplication may be: A sequence obtained after a conjugate of the ith reference frequency sequence having the frequency offset is multiplied by the synchronization sequence having the frequency offset, or a sequence obtained after a conjugate of the synchronization sequence having the frequency offset is multiplied by the ith reference frequency sequence having the frequency offset. For example, the first synchronization sequence is represented as $s_{sync}(n)$, the ith reference frequency sequence is represented as $e^{j2\pi\frac{f_i}{f_s}n}$, $f_i$ is a frequency of the ith reference frequency sequence, $f_s$ is a sampling frequency of an analog-to-digital converter, and a frequency offset generated by the first synchronization sequence and the ith reference frequency sequence in a demodulation process is represented as $f_{offset}$. In this case, the synchronization sequence having the frequency offset is represented as $s_{sync}(n)e^{j2\pi\frac{f_{offset}n}{f_s}}$, and the sequence obtained after the conjugate of the ith reference frequency sequence having the frequency offset is represented as $e^{j2\pi\frac{-(f_i+f_{offset})n}{f_s}}$. On this basis, the conjugate transpose multiplication is represented as $s_{sync}(n)e^{j2\pi\frac{f_{offset}n}{f_s}}e^{j2\pi\frac{-(f_i+f_{offset})n}{f_s}} = s_{sync}(n)e^{j2\pi\frac{-f_1n}{f_s}}$, that is, impact of the frequency offset is eliminated, so that the time domain position of the correlation peak can subsequently be determined accurately. In addition, there is no restriction on the frequency offset by the conjugate transpose multiplication. This means that even a large frequency offset can also be eliminated.

In a possible design solution, after the second device receives the first signal, the method according to the second aspect further includes: The second device receives a wake-up signal, where data in the wake-up signal is carried in a combination of on states or off states of resource units in a resource unit set, and the resource unit set belongs to the first time-frequency resource.

Optionally, the resource unit occupies at least one OFDM symbol in time, and the resource unit occupies at least one carrier in frequency.

It may be understood that for other technical effects of the method according to the second aspect, refer to the technical effects of the method according to the first aspect. Details are not described again.

According to a third aspect, a communication apparatus is provided. The apparatus includes a module configured to perform the method according to the first aspect. For example, the apparatus includes a transceiver module and a processing module. The processing module is configured to determine a first signal; and the transceiver module is configured to send the first signal. The first signal is carried on a first time-frequency resource, and the first signal includes a first synchronization signal and N reference frequency signals, where N is a positive integer. Time domain positions of the first synchronization signal and the N reference frequency signals are different, and each of the N reference frequency signals is a signal of a single frequency.

In a possible design solution, at least two of the N reference frequency signals are located at different frequency domain positions.

Optionally, at least two of the N reference frequency signals are located at a same time domain position.

Alternatively, at least two of the N reference frequency signals are located at different time domain positions.

Further, at least two of the N reference frequency signals are located at consecutive time domain positions.

In a possible design solution, an ith reference frequency signal in the N reference frequency signals is $e^{j2\pi f_i t}$,

where i is any integer ranging from 1 to N, $f_i$ is a frequency of the $i^{th}$ reference frequency signal, $0 < t \le T_{sym}$, and $T_{sym}$ is duration of the $i^{th}$ reference frequency signal.

In a possible design solution, the transceiver module is further configured to send a wake-up signal after sending the first signal. Data in the wake-up signal is carried in a combination of on states or off states of resource units in a resource unit set, and the resource unit set belongs to the first time-frequency resource.

Optionally, the resource unit occupies at least one orthogonal frequency division multiplexing OFDM symbol in time, and the resource unit occupies at least one OFDM subcarrier in frequency.

Optionally, the transceiver module may alternatively include a sending module and a receiving module. The sending module is configured to implement a sending function of the apparatus according to the third aspect, and the receiving module is configured to implement a receiving function of the apparatus according to the third aspect.

Optionally, the apparatus according to the third aspect may further include a storage module, and the storage module stores a program or instructions. When the processing module executes the program or the instructions, the apparatus is enabled to perform the method according to the first aspect.

It should be noted that the apparatus according to the third aspect may be a terminal or a network device, may be a chip (system) or another component or subassembly that may be disposed in a terminal or a network device, or may be an apparatus including a terminal or a network device. This is not limited in this application.

In addition, for technical effects of the apparatus according to the third aspect, refer to the technical effects of the method according to the first aspect. Details are not described again.

According to a fourth aspect, a communication apparatus is provided. The apparatus includes a module configured to perform the method according to the second aspect. For example, the apparatus includes a transceiver module and a processing module. The transceiver module is configured to receive a first signal; and the processing module is configured to parse the first signal. The first signal is carried on a first time-frequency resource, and the first signal includes a first synchronization signal and N reference frequency signals, where N is an integer. Time domain positions of the first synchronization signal and the N reference frequency signals are different, and each of the N reference frequency signals is a signal of a single frequency.

In a possible design solution, at least two of the N reference frequency signals are located at different frequency domain positions.

Optionally, at least two of the N reference frequency signals are located at a same time domain position. Alternatively, at least two of the N reference frequency signals are located at different time domain positions.

Further, at least two of the N reference frequency signals are located at consecutive time domain positions.

In a possible design solution, an $i^{th}$ reference frequency signal in the N reference frequency signals is $e^{j2\pi f_i t}$, where i is any integer ranging from 1 to N, $f_i$ is a frequency of the $i^{th}$ reference frequency signal, $0 < t \le T_{sym}$, and $T_{sym}$ is duration of the $i^{th}$ reference frequency signal.

In a possible design solution, the processing module is further configured to: demodulate the first signal to obtain a synchronization sequence having a frequency offset and N reference frequency sequences having frequency offsets; and determine a time domain position of a correlation peak based on the synchronization sequence having the frequency offset, the N reference frequency sequences having the frequency offsets, a first synchronization sequence, and N reference frequency sequences. The synchronization sequence having the frequency offset is a sequence obtained by demodulating the first synchronization signal, an $i^{th}$ reference frequency sequence having a frequency offset in the N reference frequency sequences having the frequency offsets is a sequence obtained by demodulating the $i^{th}$ reference frequency signal in the N reference frequency signals, and i is any integer ranging from 1 to N. The first synchronization sequence is used to obtain the first synchronization signal through modulation, and the N reference frequency sequences are used to obtain the N reference frequency signals through modulation.

Optionally, the processing module is further configured to: multiply the synchronization sequence having the frequency offset by a conjugate transpose of the $i^{th}$ reference frequency sequence having the frequency offset, to obtain an $i^{th}$ conjugate transpose sequence; and perform a correlation operation on the $i^{th}$ conjugate transpose sequence, the first synchronization sequence, and an $i^{th}$ reference frequency sequence, to determine the time domain position of the correlation peak.

In a possible design solution, the transceiver module is further configured to receive a wake-up signal after receiving the first signal. Data in the wake-up signal is carried in a combination of on states or off states of resource units in a resource unit set, and the resource unit set belongs to the first time-frequency resource.

Optionally, the resource unit occupies at least one OFDM symbol in time, and the resource unit occupies at least one carrier in frequency.

Optionally, the transceiver module may alternatively include a sending module and a receiving module. The sending module is configured to implement a sending function of the apparatus according to the fourth aspect, and the receiving module is configured to implement a receiving function of the apparatus according to the fourth aspect.

Optionally, the apparatus according to the fourth aspect may further include a storage module, and the storage module stores a program or instructions. When the processing module executes the program or the instructions, the apparatus is enabled to perform the method according to the second aspect.

It should be noted that the apparatus according to the fourth aspect may be a terminal or a network device, may be a chip (system) or another component or subassembly that may be disposed in a terminal or a network device, or may be an apparatus including a terminal or a network device. This is not limited in this application.

In addition, for technical effects of the apparatus according to the fourth aspect, refer to the technical effects of the method according to the second aspect. Details are not described herein again.

According to a fifth aspect, a communication apparatus is provided. The apparatus includes a processor. The processor is configured to perform the method according to the first aspect or the second aspect.

In a possible design solution, the apparatus according to the fifth aspect may further include a transceiver. The transceiver may be a transceiver circuit or an interface circuit. The transceiver may be used by the apparatus to communicate with another apparatus.

In a possible design solution, the apparatus according to the fifth aspect may further include a memory. The memory and the processor may be integrated together, or may be disposed separately. The memory may be configured to store a computer program and/or data related to the method according to the first aspect or the second aspect.

In this application, the apparatus according to the fifth aspect may be the terminal or the network device in the first aspect or the second aspect, for example, the first device or the second device, a chip (system) or another component or subassembly that may be disposed in the terminal or the network device, or an apparatus including the terminal or the network device.

In addition, for technical effects of the apparatus according to the fifth aspect, refer to the technical effects of the method according to the first aspect or the second aspect. Details are not described herein again.

According to a sixth aspect, a communication apparatus is provided. The apparatus includes a processor and a memory. The memory is configured to store computer instructions. When the processor executes the instructions, the apparatus is enabled to perform the method according to the first aspect or the second aspect.

In a possible design solution, the apparatus according to the sixth aspect may further include a transceiver. The transceiver may be a transceiver circuit or an interface circuit. The transceiver may be used by the apparatus to communicate with another apparatus.

In this application, the apparatus according to the sixth aspect may be the terminal or the network device in the first aspect or the second aspect, for example, the first device or the second device, a chip (system) or another component or subassembly that may be disposed in the terminal or the network device, or an apparatus including the terminal or the network device.

In addition, for technical effects of the apparatus according to the sixth aspect, refer to the technical effects of the method according to the first aspect or the second aspect. Details are not described herein again.

According to a seventh aspect, a communication apparatus is provided. The apparatus includes a logic circuit and an input/output interface. The input/output interface is configured to receive code instructions and transmit the code instructions to the logic circuit. The logic circuit is configured to run code instructions to perform the method according to the first aspect or the second aspect.

In this application, the apparatus according to the seventh aspect may be the terminal or the network device in the first aspect or the second aspect, for example, the first device or the second device, a chip (system) or another component or subassembly that may be disposed in the terminal or the network device, or an apparatus including the terminal or the network device.

In addition, for technical effects of the apparatus according to the seventh aspect, refer to the technical effects of the method according to the first aspect or the second aspect. Details are not described herein again.

According to an eighth aspect, a communication apparatus is provided. The apparatus includes a processor and a transceiver. The transceiver is configured to exchange information between the communication apparatus and another apparatus. The processor executes program instructions to perform the method according to the first aspect or the second aspect.

In a possible design solution, the apparatus according to the eighth aspect may further include a memory. The memory and the processor may be integrated together, or may be disposed separately. The memory may be configured to store a computer program and/or data related to the method according to the first aspect or the second aspect.

In this application, the apparatus according to the eighth aspect may be the terminal or the network device in the first aspect or the second aspect, for example, the first device or the second device, a chip (system) or another component or subassembly that may be disposed in the terminal or the network device, or an apparatus including the terminal or the network device.

In addition, for technical effects of the apparatus according to the eighth aspect, refer to the technical effects of the method according to the first aspect or the second aspect. Details are not described herein again.

According to a ninth aspect, a communication system is provided. The communication system includes one or more first devices and one or more second devices. The first device is configured to perform the method according to the first aspect, and the second device is configured to perform the method according to the second aspect.

According to a tenth aspect, a computer-readable storage medium is provided, including a computer program or instructions. When the computer program or the instructions are run on a computer, the computer is enabled to perform the method according to the first aspect or the second aspect.

According to an eleventh aspect, a computer program product is provided, including a computer program or instructions. When the computer program or the instructions are run on a computer, the computer is enabled to perform the method according to the first aspect or the second aspect.

**BRIEF DESCRIPTION OF DRAWINGS**

FIG. 1 is a schematic diagram of resource distribution in OFDM modulation;

FIG. 2 is a schematic diagram of a transmitting procedure and a receiving procedure of OFDM modulation;

FIG. 3 is a schematic diagram of an architecture of a receiver;

FIG. 4 is a schematic diagram of an architecture of a wake-up link;

FIG. 5 is a schematic diagram of a time domain position relationship between a synchronization signal and a data signal;

FIG. 6 is a schematic diagram 1 of a waveform of a correlation peak;

FIG. 7 is a schematic diagram 2 of a waveform of a correlation peak;

FIG. 8 is a schematic diagram of an architecture of a communication system according to an embodiment of this application;

FIG. 9 is a schematic flowchart of a communication method according to an embodiment of this application;

FIG. 10 is a schematic diagram 1 of a time domain position relationship between a synchronization signal and a reference frequency signal according to an embodiment of this application;

FIG. 11(a) to FIG. 11(e) are a schematic diagram 1 of a time-frequency position relationship between a synchronization signal and a reference frequency signal according to an embodiment of this application;

FIG. 12 is a schematic diagram 2 of a time-frequency position relationship between a synchronization signal and a reference frequency signal according to an embodiment of this application;

FIG. 13 is a schematic diagram 2 of a time domain position relationship between a synchronization signal and a reference frequency signal according to an embodiment of this application;

FIG. 14 is a schematic diagram 3 of a time-frequency position relationship between a synchronization signal and a reference frequency signal according to an embodiment of this application;

FIG. 15 is a schematic diagram 3 of a time domain position relationship between a synchronization signal and a reference frequency signal according to an embodiment of this application;

FIG. 16 is a schematic diagram 4 of a time-frequency position relationship between a synchronization signal and a reference frequency signal according to an embodiment of this application;

FIG. 17 is a schematic diagram 4 of a time domain position relationship between a synchronization signal and a reference frequency signal according to an embodiment of this application;

FIG. 18 is a schematic diagram of time-frequency domain distribution of a resource unit set according to an embodiment of this application;

FIG. 19 is a schematic diagram 1 of a structure of a communication apparatus according to an embodiment of this application;

FIG. 20 is a schematic diagram 2 of a structure of a communication apparatus according to an embodiment of this application; and

FIG. 21 is a schematic diagram 3 of a structure of a communication apparatus according to an embodiment of this application.

**DESCRIPTION OF EMBODIMENTS**

For ease of understanding, the following first describes technical terms in embodiments of this application.

1. Orthogonal frequency division multiplexing (orthogonal frequency division multiplexing, OFDM)

OFDM is a modulation scheme widely used in a modern communication system, for example, an LTE system or an NR system.

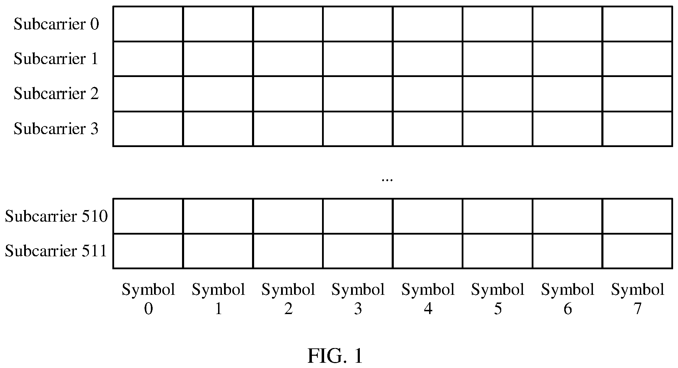

FIG. 1 shows division of time-frequency resources in OFDM modulation. In OFDM modulation, a time-frequency resource of a system is divided into two-dimensional time-frequency grids. In frequency domain, a frequency domain resource (or a system bandwidth) is divided into a plurality of parallel subcarriers by using a subcarrier (subcarrier) as a granularity. For example, FIG. 1 shows 512 subcarriers (including subcarriers 0 to 511). In time domain, a time domain resource is divided into a plurality of consecutive symbols by using a symbol (symbol) as a granularity. For example, FIG. 1 shows eight symbols (including symbols 0 to 7). A time-frequency resource with duration of one symbol and a frequency width of one subcarrier is referred to as a resource element (resource element, RE). For example, one grid in FIG. 1 is one RE. Each RE may be used to carry one signal in OFDM modulation, to implement data receiving and sending.

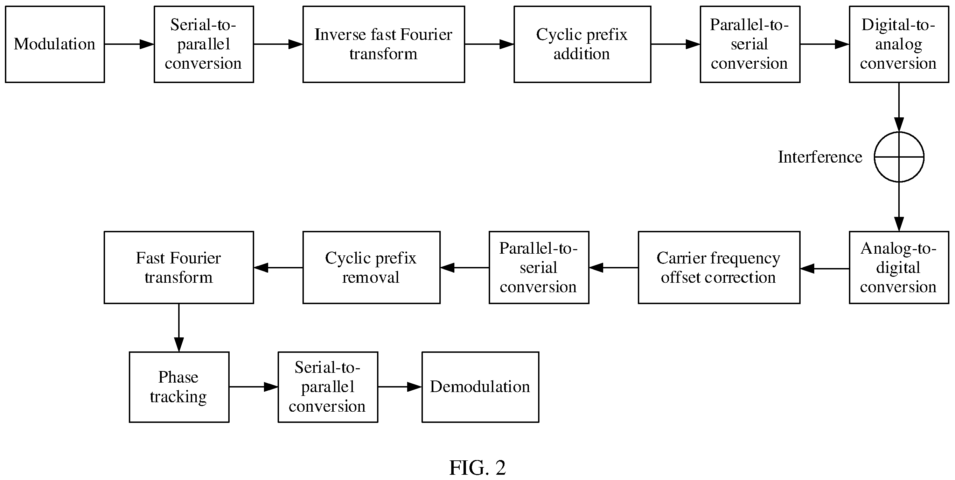

FIG. 2 shows a transmitting procedure and a receiving procedure in OFDM modulation. A transmitter (transmitter) first maps a to-be-transmitted bit stream to a symbol through modulation (modulation). Common modulation manners include: binary phase shift keying (binary phase shift keying, BPSK), pi/2-BPSK, quadrature phase shift keying (quadrature phase shift keying, QPSK), pi/4 QPSK, 8-phase shift keying (8 phase shift keying, 8PSK), 16PSK, quadrature amplitude modulation (quadrature amplitude modulation, QAM), 16QAM, 64QAM, and the like. Then, the transmitter may map each modulation symbol to a corresponding subcarrier through serial-to-parallel conversion (SIPO/PISO, S/P), and convert data on each subcarrier into a time domain signal through inverse fast Fourier transform (inverse fast Fourier transform, IFFT). Finally, the transmitter adds a cyclic prefix (cyclic prefix, CP) to the time domain signal, and transmits, to a channel, a corresponding signal on which parallel-to-serial conversion (PISO/SIPO, P/S), digital-to-analog (digital-to-analog, DA) conversion, and up-conversion are performed. Because a signal is interfered with during transmission over an air interface, a receiver (receiver) may receive a signal with interference. In a down-conversion process, the receiver may further generate a frequency offset due to a deviation of a local oscillator. The receiver may perform analog-to-digital conversion and carrier frequency offset correction (carrier frequency offset correction, CFO correction) on the signal with interference and a frequency offset. Then, the receiver may sequentially perform parallel-to-serial conversion, cyclic prefix removal, and fast Fourier transform (fast Fourier transform, FFT) on the signal with interference filtered out, to obtain a frequency domain signal. Finally, the receiver performs digital signal processing such as phase tracking, serial-to-parallel conversion, demodulation (demodulation), and decoding on the frequency domain signal, to obtain sent data.

It should be noted that the receiver and the transmitter are relative concepts. One device may be used only as a receiver or a transmitter, or may be used as both a receiver and a transmitter. This is not specifically limited in this application.

2. State of a terminal

In mobile communication (mobile communication), power saving (or referred to as energy saving) is one of important objectives that the terminal needs to achieve. Standby time of some forms of terminals, such as mobile phones or wearable devices, greatly affects user experience. Some other forms of terminals, such as wireless industrial sensors, are designed to work for several years without replacing batteries because of difficulty in battery replacement.

To achieve this objective, that is, power saving, a current implementation is to enable the terminal to work in different states (or modes), such as a connected (connected) state, an idle (idle) state, and an inactive (inactive) state according to different service requirements. For example, when the terminal has a service and needs to receive and send data, the terminal may work in the connected state. In this case, signaling may be exchanged and data may be received and sent between the terminal and a network device. In the connected state, power consumption of the terminal is high, which is not conducive to energy saving. When the terminal has no service and does not need to receive or send data, the terminal may work in the idle (idle) state or the inactive (inactive) state. In this case, the terminal enables a circuit to enter a sleep state and periodically wake up to detect whether there is data to be sent to the terminal. If there is data to be sent to the terminal, the terminal enters the connected state; otherwise, the terminal remains in the idle state or the inactive state, to continue to sleep. Power consumption of the terminal in the idle state or the inactive state is much lower than that in the connected state. Usually, the terminal is in the idle state or the inactive state for a longer time. For example, a user uses a mobile phone for four hours a day, and duration for which the mobile phone stays in a connected state is four hours; and the mobile phone is in an idle state or an inactive state for the other 20 hours. Therefore, power consumption of the terminal in the idle state or the inactive state determines standby time of the terminal to a great extent, and determines whether the terminal can achieve an objective of energy saving.

3. Main link and wake-up link

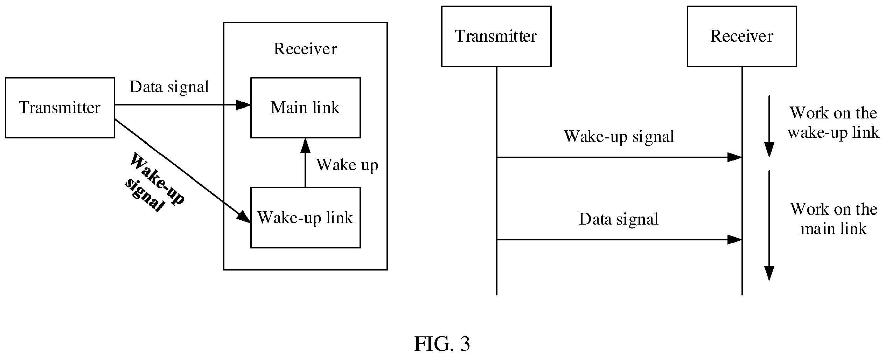

To reduce power consumption of a terminal in an idle state or an inactive state as much as possible, a new receiver architecture is widely paid attention to in recent years. FIG. 3 shows a receiver architecture in which a terminal is used as an example. In this architecture, the terminal is divided into a main link (main radio) and wake-up radio (wake-up radio, WUR), namely, a wake-up link.

The main link, or referred to as a main circuit, a main receiver, or a main module, may be understood as a link used when the terminal normally receives and sends data, or a link used when the terminal transmits data in the connected state. Power consumption of the main link is high. A signal received and sent by the terminal over the main link may be referred to as being transmitted over the main link, which represents a connection relationship between the terminal and another device, for example, a network device or another terminal. The main link is a logical concept rather than a physical entity. It may be understood that the main link is merely an example name, and a specific name of the main link does not limit the protection scope of this application. For example, without loss of generality, the main link may also be described as a first link. The first link may alternatively be replaced with a first circuit, a first state, a first mode, a first module, or the like. For ease of understanding, the following uses the main link for uniform description.

The wake-up link, or referred to as a wake-up circuit, a wake-up receiver, or a wake-up module, may be understood as a link used by the terminal in the idle state or the inactive state, or may be understood as a separate low-power small circuit. The low-power small circuit may be implemented by using a separate small circuit or chip with a simple structure, and has low power consumption. It may be understood that the wake-up link is merely a name for differentiation, and a specific name of the wake-up link does not limit the protection scope of this application. For example, without loss of generality, the wake-up link may also be described as a second link. The second link may alternatively be replaced with a second circuit, a second state, a second mode, a second module, or the like. For ease of understanding, the following uses the wake-up link for uniform description.

A signal received and sent by the terminal over the wake-up link may be referred to as being transmitted over the wake-up link, which represents a connection relationship between the terminal and another device, for example, a network device or another terminal. The wake-up link is a logical concept rather than a physical entity. The signal received and sent by the terminal over the wake-up link may be referred to, for example, as a wake-up signal/radio (wake up signal/radio, WUS/WUR). For ease of understanding, the following uses a WUR signal as an example for description. The WUR signal may include a paging-related signal. For example, the WUR signal may include a wake-up signal, and may further include a synchronization signal. The wake-up signal at least indicates paging-related information (for example, indicates information about a terminal that needs to perform receiving). Receiving the WUR signal (for example, the wake-up signal) over the wake-up link may be understood as working on the wake-up link, receiving the wake-up signal over the wake-up link, receiving the wake-up signal over the first link, or the like. For example, when the terminal has no service and works in the idle state or the inactive state, the main link is disabled, and the wake-up link is enabled. In this case, power consumption is very low, and effect of power saving can be achieved. When the network device needs to send a service to the terminal, the network device needs to send a wake-up signal to the wake-up link. After receiving the wake-up signal over the wake-up link, the terminal is triggered to start the main link, enter the connected state, and then perform normal data receiving and sending.

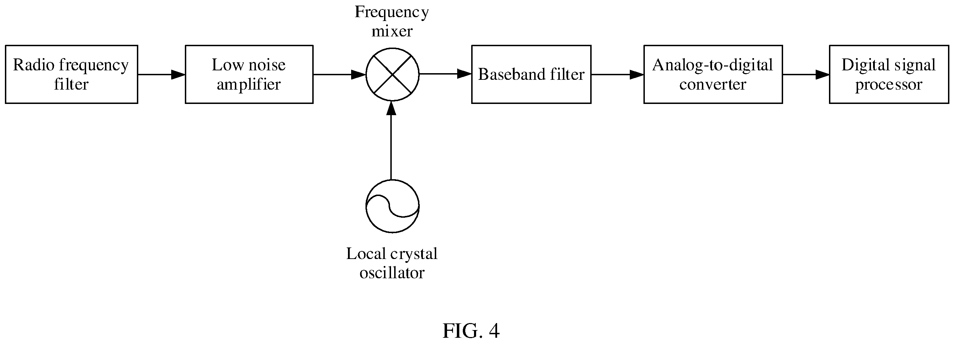

FIG. 4 shows a specific architecture of the wake-up link of the terminal in FIG. 3. The synchronization signal is used as an example. After receiving the synchronization signal, the terminal first performs radio frequency filtering on the synchronization signal based on a radio frequency filter, and then amplifies a filtered synchronization signal based on a low noise amplifier, to obtain an amplified synchronization signal. Then, the terminal may perform, based on a frequency mixer (as shown by a multiplication sign in FIG. 4), down-conversion on the amplified synchronization signal by using a local oscillator signal generated by a local oscillator, and then perform analog-to-digital conversion on a down-converted synchronization signal based on a baseband filter and an analog-to-digital converter (analog-to-digital converter, ADC), to obtain a digital synchronization signal. Finally, the terminal performs digital signal processing on the digital synchronization signal, to implement synchronization with another device, for example, a network device or another terminal, based on a signal processing result. It may be understood that, for a specific procedure in which the terminal performs the digital signal processing on the digital synchronization signal, refer to related descriptions in the foregoing "1. OFDM". Details are not described again.

It should be noted that, a process in which the terminal performs the down-conversion on the amplified synchronization signal based on the frequency mixer may be: The terminal performs, based on the frequency mixer, a multiplication operation on the amplified synchronization signal and the signal generated by the local oscillator (local oscillator, LO), to implement down-conversion. In a specific example, it is assumed that an expression of a baseband signal is $s_{wur}(t)$. During actual sending, the network device or another terminal modulates the baseband signal to a high-frequency carrier frequency. For example, the carrier frequency may be represented as $s_{wur}(t)e^{j2\pi f_c t}$, where $f_c$ is a frequency (for example, 3 GHz) of the carrier frequency, and $t$ is time. Correspondingly, the terminal may perform, based on the frequency mixer, a multiplication operation on a single-frequency signal generated by the local oscillator and the carrier frequency, to restore the high-frequency carrier frequency to the baseband signal, thereby achieving the objective of down-conversion. For example, a frequency of the single-frequency signal corresponds to the carrier frequency, and may be represented as $e^{j2\pi f_c t}$, and a multiplication operation performed by the frequency mixer may be represented as $s_{wur}(t)e^{j2\pi f_c t} \times e^{-j2\pi f_c t} = s_{wur}(t)$. It is noted that, in an equivalent mixing model of a complex signal, a multiplication operation performed by the frequency mixer is a signal obtained after a conjugate is multiplied. It can be learned from the formula that a correct baseband signal can be demodulated only when the single-frequency signal generated by the local oscillator of the terminal is the same as the carrier frequency used by the network device for frequency modulation.

However, a carrier frequency of a synchronization signal that is modulated by the network device and that is sent to the terminal is high, and a high-performance local oscillator and a high-performance frequency mixer are needed to generate a same single-frequency signal as the synchronization signal, to implement correct demodulation. However, the high-performance local oscillator and the high-performance frequency mixer consume a large amount of power. To achieve an objective of low power consumption of the wake-up link, some low-power components are usually used for the wake-up link. Performance indicators of these low-power components are poor. For example, for a low-power local oscillator, a single-frequency signal generated by the local oscillator has a larger frequency offset (referred to as a frequency offset). To be specific, there is a deviation between a frequency of an actually generated single-frequency signal and a frequency that is needed. For example, the local oscillator needs to generate a single-frequency signal with a frequency of $f_c$, which may be represented as $e^{j2\pi f_c t}$. However, due to performance deviation, the local oscillator actually generates a frequency of $f_c + f_{offset}$, which may be represented as $e^{j2\pi(f_c + foffset)t}$. In this case, a baseband signal obtained through down-conversion is not an ideal baseband signal, but a baseband signal having a frequency offset, for example, represented as $s_{wur}(t)e^{j2\pi f_c t} \times e^{-j2\pi(f_c + foffset)t} = s_{wur}(t)e^{-j2\pi foffsett}$. It can be learned that a residual frequency offset of the baseband signal has serious impact on synchronization, which will be specifically described in the following.

4. Synchronization

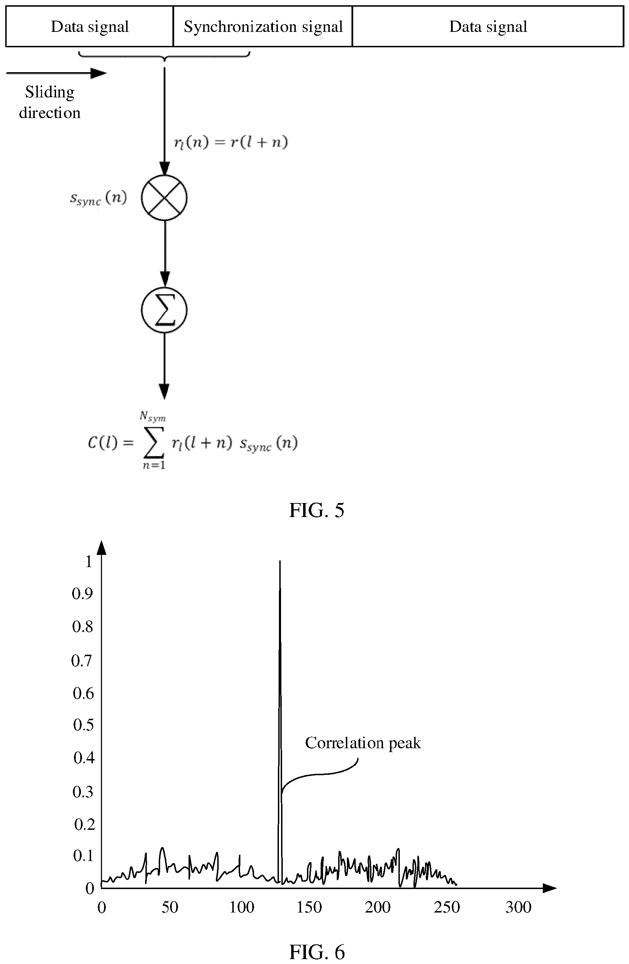

In a communication system, a transmitter and a receiver need to implement time synchronization first to complete a receiving and sending process. Synchronization means that a receiver needs to find a boundary of a received signal. An OFDM system is used as an example. The receiver, for example, a terminal, needs to find a start position and an end position of each symbol in the received signal. To help the terminal find the boundary of the signal and implement synchronization, a common transmitter, for example, a network device or another terminal, sends a synchronization signal. The synchronization signal is generally designed as a signal obtained through modulation based on a signal sequence. The signal sequence is usually a sequence having a good autocorrelation characteristic, and is also referred to as a synchronization sequence. The terminal may locally store the synchronization sequence in advance, and perform sliding correlation with the received signal by using a local synchronization sequence. When a synchronization sequence that slides into the received signal is aligned with the local synchronization sequence at a moment, a significant correlation peak appears, so that it is determined that the moment is a moment at which the transmitter and the receiver are aligned, thereby completing device synchronization. For ease of understanding, the following specifically describes a synchronization process of the terminal with reference to FIG. 5.

FIG. 5 shows a time domain position relationship between a synchronization signal and a data signal. As shown in FIG. 5, a signal sequence of the synchronization signal is $s_{sync}(n)$, where $0 < n \le N_{sym}$, and $N_{sym}$ is a quantity of sampling points of an analog-to-digital converter of the terminal. Because the terminal does not know a specific position of the synchronization sequence in advance, the terminal may perform sliding correlation on the received signal by using a sliding window whose length is $N_{sym}$ sampling points. Sliding correlation means that the terminal performs an interception on a sampled sequence based on the sliding window, and after performing a correlation operation on an intercepted signal, the terminal may slide the sliding window by one sampling point in a direction indicated by an arrow in FIG. 5, and then perform a next interception and correlation operation. Each interception operation based on the sliding window means to intercept $N_{sym}$ sampling points from corresponding positions in the signal, and a sequence obtained through sampling may be represented as $r(n)$. An $l^{th}$ sliding is used as an example. A sequence obtained through sampling may be represented as $r_l(n) = r(l + n)$, where $l$ is a positive integer. The terminal may perform a correlation operation on a sequence obtained through interception at the $l^{th}$ sliding and a synchronization sequence stored locally in advance by the terminal, for example, perform conjugate multiplication and addition, and an obtained correlation value may be

represented as $C(l) = \sum_{n=1}^{N_{sym}} r_l(l + n) s_{sync}(n)$. When the sequence obtained through sampling at the $l^{th}$ sliding is aligned with the synchronization sequence, $r_l(n)$ is $s_{sync}(n)$. In this case, the correlation value may be represented as:

$$C_{max} = \sum_{n=1}^{N_{sym}} s_{sync}(n) s_{sync}(n) = \sum_{n=1}^{N_{sym}} |s_{sync}(n)|^2$$, that is, the correlation value reaches a maximum value. In a waveform, when the correlation value reaches the maximum value, a significant correlation peak appears. For example, as shown in Figure 6, a time domain position of the correlation peak is an alignment position, or an alignment moment.

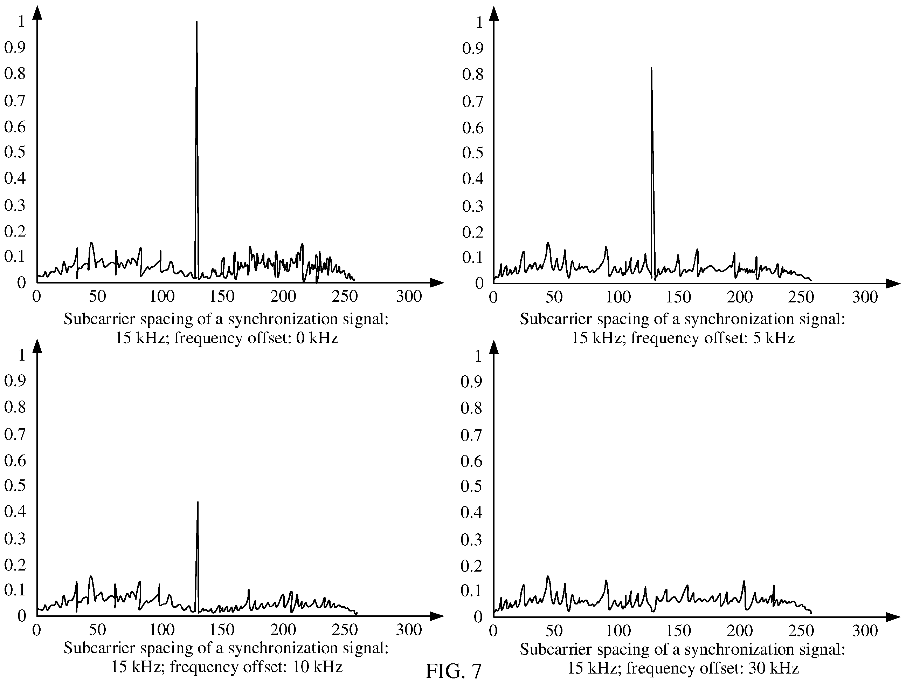

As described above, because a wake-up link uses a low-power local oscillator, a sequence obtained through sampling has a residual frequency offset, which may be represented as $r(t) = s_{wur}(t)e^{-j2\pi foffsett}$. The existence of the frequency offset has serious impact on a correlation result. For example, a correlation sequence has a good autocorrelation characteristic, that is, a correlation peak may be obtained when a present sequence correlates with the present sequence. However, when there is a frequency offset, a sequence having a frequency offset correlates with the present sequence, the autocorrelation characteristic is damaged, and there is no obvious correlation peak. The OFDM system is used as an example. FIG. 7 shows heights of correlation peaks of the OFDM system under impact of different frequency offsets. It can be learned that, greater frequency offsets lead to lower heights of the correlation peaks. When the frequency offset exceeds a subcarrier spacing (for example, 15 kilohertz (kHz)), the correlation peak completely disappears. Due to a poor performance indicator of the low-power local oscillator, a frequency offset generated by the local oscillator often exceeds the subcarrier spacing. As a result, it is difficult for the terminal to determine the time domain position of the correlation peak and to complete device synchronization, thereby affecting synchronization performance of the terminal in a sleep state.

In conclusion, for the foregoing technical problems, embodiments of this application provide the following technical solutions, to ensure synchronization performance of a device in a sleep state.

The technical solutions in embodiments of this application may be applied to various communication systems, for example, a wireless fidelity (wireless fidelity, Wi-Fi) system, a vehicle to everything (vehicle to everything, V2X) communication system, a device-to-device (device-to-device, D2D) communication system, an internet of vehicles communication system, a 4th generation (4th generation, 4G) mobile communication system, such as a long term evolution (long term evolution, LTE) system and a 5th generation (5th generation, 5G) mobile communication system, for example, a new radio (new radio, NR) system, and a future communication system, such as a 6th generation (6th generation, 6G) communication system. Certainly, the future communication system may also be named in another manner, which is still covered in the scope of this application. This is not limited in this application.

All aspects, embodiments, or features are presented in this application by describing a system that may include a plurality of devices, components, modules, and the like. It should be appreciated and understood that each system may include another device, component, module, and the like, and/or may not include all devices, components, modules, and the like discussed with reference to the accompanying drawings. In addition, a combination of these solutions may also be used.

In addition, in embodiments of this application, terms such as "example" or "for example" represent giving an example, an illustration, or a description. Any embodiment or design solution described as an "example" in this application should not be explained as being more preferred or having more advantages than another embodiment or design solution. Exactly, the term "example" is used to present a concept in a specific manner.

In embodiments of this application, terms "information (information)", "signal (signal)", "message (message)", "channel (channel)", and "signaling (signaling)" may sometimes be interchangeably used. It should be noted that meanings expressed by the terms are consistent when differences of the terms are not emphasized. Terms "of (of)", "corresponding (corresponding, related)", and "corresponding (corresponding)" may sometimes be interchangeably used. It should be noted that meanings expressed by the terms are consistent when differences of the terms are not emphasized. In addition, "/" mentioned in this application may represent an "or" relationship. In embodiments of this application, "same" does not necessarily mean that two objects are completely the same. It may also be considered that the two objects are the "same" when there is a specific error between the two objects. In other words, "same" may be understood as "close to" or "approximately the same".

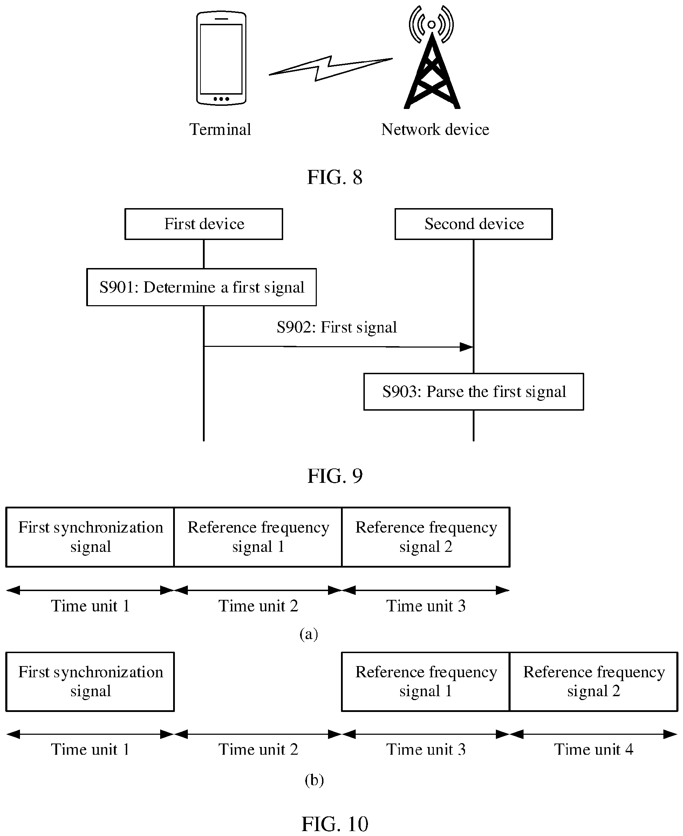

For ease of understanding embodiments of this application, a communication system shown in FIG. 8 is used as an example to first describe in detail a communication system applicable to embodiments of this application. For example, FIG. 8 is a schematic diagram of an architecture of a communication system to which a communication method according to embodiments of this application is applicable.

As shown in FIG. 8, the communication system includes a terminal and a network device.

The terminal is a terminal that accesses a network and has a wireless transceiver function, or a chip or a chip system that may be disposed in the terminal. The terminal may also be referred to as user apparatus (user equipment, UE), an access terminal, a subscriber unit (subscriber unit), a subscriber station, a mobile station (mobile station, MS), a remote station, a remote terminal, a mobile device, a user terminal, a terminal, a wireless communication device, a user agent, or a user apparatus. The terminal in embodiments of this application may be a mobile phone (mobile phone), a cellular phone (cellular phone), a smartphone (smartphone), a tablet computer (Pad), a wireless data card, a personal digital assistant (personal digital assistant, PDA), a wireless modem (modem), a handset (handset), a laptop computer (laptop computer), a machine type communication (machine type communication, MTC) terminal, a computer having a wireless transceiver function, a virtual reality (virtual reality, VR) terminal, an augmented reality (augmented reality, AR) terminal, a wireless terminal in industrial control (industrial control), a wireless terminal in self-driving (self-driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), a vehicle-mounted terminal, a road side unit (road side unit, RSU) that has a terminal function, or the like. Alternatively, the terminal in this application may alternatively be a vehicle-mounted module, a vehicle-mounted subassembly, a vehicle-mounted component, a vehicle-mounted chip, or a vehicle-mounted unit that is built in a vehicle as one or more components or units.

The network device, for example, an access network device, is a device that is located on a network side of the communication system and has a wireless transceiver function, or a chip or a chip system that may be disposed in the device. The network device may include a next-generation mobile communication system, for example, a 6G access network device, for example, a 6G base station, or a 6G core network element. Alternatively, in the next-generation mobile communication system, the network device may be named in another manner, which falls within the protection scope of embodiments of this application. This is not limited in this application. In addition, the network device may alternatively include 5G, for example, a gNB in an NR system, or one or a group of (including a plurality of antenna panels) antenna panels of a base station in 5G, or may be a network node that forms a gNB, a transmission point (transmission and reception point, TRP, or transmission point, TP), or a transmission measurement function (transmission measurement function, TMF), for example, a baseband unit (baseband unit, BBU), a central unit (central unit, CU) or a distributed unit (distributed unit, DU), an RSU having a base station function, a wired access gateway, or a 5G core network element. In addition, the network device may further include an access point (access point, AP), a wireless relay node, a wireless backhaul node, macro base stations in various forms, a micro base station (also referred to as a small cell), a relay station, an access point, a wearable device, a vehicle-mounted device, and the like in a wireless fidelity (wireless fidelity, Wi-Fi) system.

The foregoing describes the communication system to which the communication method according to embodiments of this application is applicable. The following specifically describes the communication method according to embodiments of this application with reference to FIG. 9 to FIG. 18.

For example, the communication method according to embodiments of this application is applicable to communication between a first device and a second device. The first device and the second device may be the terminal or the network device in the communication system shown in FIG. 8. For example, the first device is the terminal, and the second device is the network device. For another example, both the first device and the second device are network devices. For still another example, both the first device and the second device are terminals. For yet another example, the first device is the network device, and the second device is the terminal. In the communication method according to embodiments of this application, the first device may send a signal including a synchronization signal and a reference frequency signal. In this way, after receiving the signal, the second device may eliminate, based on a frequency offset generated by the reference frequency signal in a demodulation process, a frequency offset generated by the synchronization signal in the demodulation process, to accurately determine a time domain position of a correlation peak, complete device synchronization, and ensure synchronization performance of a device in a sleep state. The following describes the communication method according to embodiments of this application with reference to specific steps.

FIG. 9 shows a procedure of a communication method according to an embodiment of this application. The communication method includes S901, S902, and S903.

S901: A first device determines a first signal.

The first signal includes a first synchronization signal and N reference frequency signals, where N is a positive integer.

The first synchronization signal is used for device synchronization, for example, used by the second device to implement synchronization with the first device based on the first synchronization signal. The first synchronization signal may be represented as $s_{sync}(t)$, where $0 < t \le T_{sym}$, and $T_{sym}$ is duration of the first synchronization signal.

The N reference frequency signals are used to eliminate a frequency offset generated by the first synchronization signal in a demodulation process, to implement device synchronization more accurately. Each of the N reference frequency signals may be a signal of a single frequency. For example, an $i^{th}$ reference frequency signal in the N reference frequency signals may be represented as $e^{j2\pi f_i t}$, where i is any integer ranging from 1 to N, $f_i$ is a frequency of the $i^{th}$ reference frequency signal, $0 < t \le T_{sym}$, and $T_{sym}$ is duration of the $i^{th}$ reference frequency signal. That is, the duration of the first synchronization signal is the same as the duration of the $i^{th}$ reference frequency signal, or it may be understood that the duration of the first synchronization signal is approximately the same as the duration of the $i^{th}$ reference frequency signal. It may be understood that the duration of the first synchronization signal being the same as the duration of the $i^{th}$ reference frequency signal is merely an example. This is not limited. For example, the duration of the first synchronization signal may alternatively be different from the duration of the $i^{th}$ reference frequency signal. For the N reference frequency signals, frequency domain positions or time domain positions of the N reference frequency signals may be the same or different, which is described in detail in the following.

At least two of the N reference frequency signals are located at different frequency domain positions, for example, located at consecutive or non-consecutive frequency domain positions. It may alternatively be considered that the at least two reference frequency signals have different frequencies. Generally, a frequency response of a radio channel is not always flat and fluctuates with an environment. When fading occurs at a frequency, for example, deep fading (deep fading for short) occurs, it is difficult to eliminate the frequency offset of the first synchronization signal by using a reference frequency signal at a deep fading frequency. Consequently, it is difficult to determine the time domain position of the correlation peak, and the synchronization performance of the device in the sleep state cannot be ensured. However, the at least two reference frequency signals are located at different frequencies, and a possibility for deep fading to occur at these frequencies is low. A frequency offset of a reference frequency signal at a non-deep fading frequency may be used to eliminate the frequency offset of the first synchronization signal and complete the device synchronization, to further ensure the synchronization performance of the device in the sleep state, provided that deep fading does not occur at one frequency. This is also called frequency diversity gain. It should be noted that, for a specific implementation principle of eliminating the frequency offset of the first synchronization signal based on the frequency offset of the reference frequency signal, refer to related descriptions in "S903". Details are not described herein again.

Two reference frequency signals are used as an example. A reference frequency signal 1 is located at a frequency 1, and a reference frequency signal 2 is located at a frequency 2. If deep fading occurs on the frequency 1, the reference frequency signal 2 on the frequency 2 may be used to eliminate the frequency offset of the first synchronization signal, to complete the device synchronization. Similarly, if deep fading occurs on a channel 2, the reference frequency signal 1 on the frequency 1 may be used to eliminate the frequency offset of the first synchronization signal, to complete the device synchronization.

Specifically, in a possible implementation, at least two of the N reference frequency signals are located at a same time domain position. In this way, time domain resources can be saved, and resource utilization and communication efficiency can be improved. In a demodulation process, the at least two reference frequency signals can generate frequency offsets closer to the frequency offset of the first synchronization signal, to eliminate the frequency offset of the first synchronization signal as much as possible, and further ensure the synchronization performance of the device in the sleep state. The two reference frequency signals are used as an example. On a basis that the reference frequency signal 1 is located at the frequency 1, and the reference frequency signal 2 is located at the frequency 2, the reference frequency signal 1 and the reference frequency signal 2 are located at a time unit 1. The time unit may be a symbol, a slot (slot), a mini-slot (mini-slot), a subframe (subframe), a radio frame (radio frame), or the like. This is not specifically limited in this application.

Alternatively, in another possible implementation, at least two of the N reference frequency signals are located at different time domain positions. The two reference frequency signals are used as an example. On a basis that the reference frequency signal 1 is located at the frequency 1, and the reference frequency signal 2 is located at the frequency 2, the reference frequency signal 1 is located at a time unit 1, and the reference frequency signal 2 is located at a time unit 2. In this way, in a demodulation process, a device (for example, the second device) can separately receive each reference frequency signal, to avoid interference from another reference frequency signal, thereby eliminating the frequency offset of the first synchronization signal as much as possible, and further ensuring the synchronization performance of the device in the sleep state. On this basis, at least two of the N reference frequency signals are located at consecutive time domain positions. For example, some reference frequency signals in the N reference frequency signals are located at consecutive time domain positions, and the other reference frequency signals are respectively located at inconsecutive time domain positions. That is, there are time domain intervals among the other reference frequency signals. For another example, the N reference frequency signals are located at consecutive time domain positions, that is, time domain positions of two adjacent reference frequency signals in the N reference frequency signals are consecutive. In this way, sending the at least two reference frequency signals at consecutive time domain positions can ensure that the at least two reference frequency signals can generate frequency offsets that are closer to each other in a demodulation process as much as possible, to eliminate the frequency offset of the first synchronization signal as much as possible, and ensure the synchronization performance of the device in the sleep state as much as possible. The two reference frequency signals are used as an example. On a basis that the reference frequency signal 1 is located at the frequency 1, and the reference frequency signal 2 is located at the frequency 2, the reference frequency signal 1 is located at a time unit 1, and the reference frequency signal 2 is located at a time unit 2.

For the first synchronization signal and the N reference frequency signals as a whole, time domain positions of the first synchronization signal and the N reference frequency signals are different. In other words, the time domain position of the first synchronization signal does not overlap a time domain position of any one of the N reference frequency signals.

In a possible manner, the first synchronization signal and the N reference frequency signals are located at consecutive time domain positions. For example, as shown in (a) in FIG. 10, two reference frequency signals are used as an example. The first synchronization signal is located at a time unit 1, a reference frequency signal 1 is located at a time unit 2, and a reference frequency signal 2 is located at a time unit 3.

In another possible manner, the first synchronization signal and the N reference frequency signals are respectively located at inconsecutive time domain positions. For example, as shown in (b) in FIG. 10, the first synchronization signal is located at a time unit 1, a reference frequency signal 1 is located at a time unit 3, and a reference frequency signal 2 is located at a time unit 4.

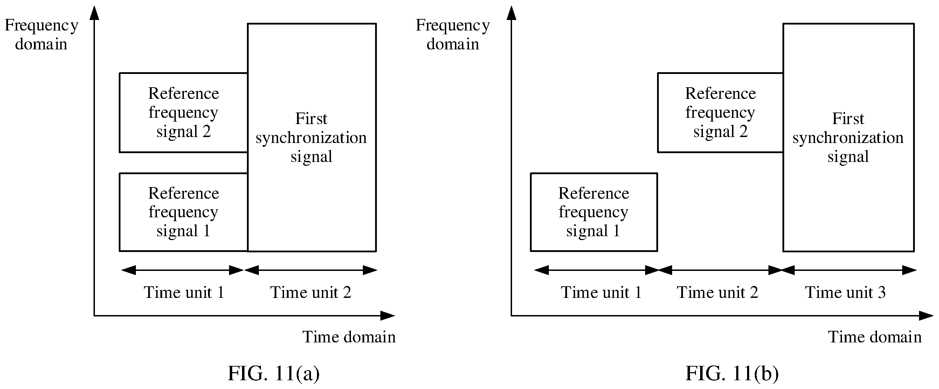

In still another possible manner, the time domain positions of the N reference frequency signals may be located before the time domain position of the first synchronization signal. For example, as shown in FIG. 11(a), two reference frequency signals are used as an example. A reference frequency signal 1 and a reference frequency signal 2 are located at a time unit 1, and the first synchronization signal is located at a time unit 2. For example, as shown in FIG. 11(b), two reference frequency signals are used as an example. A reference frequency signal 1 is located at a time unit 1, a reference frequency signal 2 is located at a time unit 2, and the first synchronization signal is located at a time unit 3.

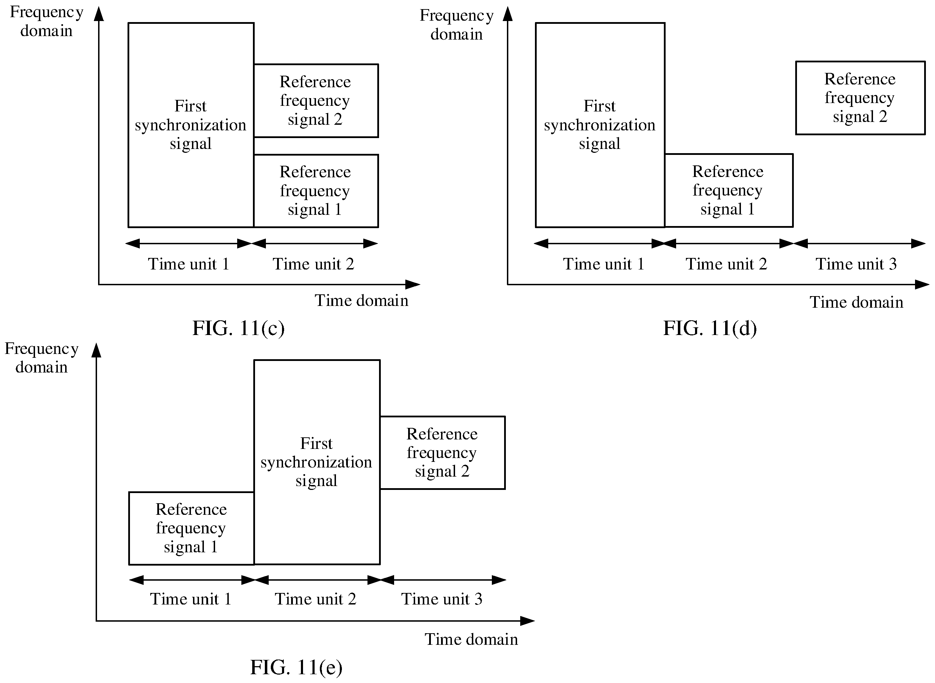

In yet another possible manner, the time domain positions of the N reference frequency signals may be located after the time domain position of the first synchronization signal. For example, as shown in FIG. 11(c), two reference frequency signals are used as an example. The first synchronization signal is located at a time unit 1, and a reference frequency signal 1 and a reference frequency signal 2 are located at a time unit 2. For example, as shown in FIG. 11(d), two reference frequency signals are used as an example. The first synchronization signal is located at a time unit 1, a reference frequency signal 1 is located at a time unit 2, and a reference frequency signal 2 is located at a time unit 3. Alternatively, time domain positions of some reference frequency signals in the N reference frequency signals may be located before the time domain position of the first synchronization signal, and time domain positions of the other reference frequency signals in the N reference frequency signals may be located after the time domain position of the first synchronization signal. For example, as shown in FIG. 11(e), two reference frequency signals are used as an example. A reference frequency signal 1 is located at a time unit 1, the first synchronization signal is located at a time unit 2, and a reference frequency signal 2 is located at a time unit 3.

That the first device determines the first signal may mean that the first device modulates a first sequence, for example, modulates the first sequence based on OFDM, to obtain the first signal.

The first sequence may include a first synchronization sequence and N reference frequency sequences. The first synchronization sequence may be selected from sequences having good autocorrelation characteristics. For example, these sequences having good autocorrelation characteristics may be Zadoff Chu sequences or Gold sequences. The first synchronization sequence may be pre-configured locally on the first device, or may be obtained by the first device from another device in advance. The first synchronization sequence is used to obtain the first synchronization signal through modulation, and the first synchronization signal may be represented as $s_{sync}(n)$, where $0 < n \le N_{sym}$, and $N_{sym}$ is a quantity of sampling points of a digital-to-analog converter of the first device. In other words, the first device performs OFDM modulation and digital-to-analog conversion on the first synchronization sequence, and modulates discrete synchronization sequences into continuous signals, to obtain the first synchronization signal.

The N reference frequency sequences are used to obtain N reference frequency signals through modulation.

An $i^{th}$ reference frequency sequence in the N reference frequency sequences may be represented as $e^{j2\pi \frac{f_i}{f_s} n}$, where $f_s$ is a sampling frequency of the digital-to-analog converter of the first device. In other words, the first device performs OFDM modulation on the $i^{th}$ reference frequency sequence, modulates $N_{sym}$ discrete reference frequency sequences into consecutive signals, and maps the consecutive signals to a carrier frequency fi, to obtain the $i^{th}$ reference frequency signal. Optionally, the carrier frequency $f_i$ may be any frequency in a bandwidth occupied by WUR. This is not specifically limited in embodiments of this application. It should be noted that, for a specific implementation procedure of OFDM modulation in this embodiment of this application, refer to related descriptions in the foregoing "1. OFDM". Details are not described again. OFDM modulation used in this embodiment of this application is merely an example. In this embodiment of this application, any other possible modulation scheme may be used. This is not specifically limited herein.

S902: The first device sends the first signal, and correspondingly, the second device receives the first signal.

The synchronization signal may be carried on a first time-frequency resource. The first time-frequency resource is a time-frequency resource corresponding to a wake-up link. The first time-frequency resource is merely an example naming manner, and may alternatively be replaced with a first frequency, a first resource, a first resource set, a first time-frequency resource set, or the like. This is not specifically limited in this application. Correspondingly, a time-frequency resource corresponding to a main link may be referred to as a second time-frequency resource. Certainly, the second time-frequency resource is merely an example naming manner, and may alternatively be replaced with a second frequency, a second resource, a second resource set, a second time-frequency resource set, or the like. This is not specifically limited in this application.

S903: The second device parses the first signal.

That the second device parses the first signal may be considered as that the second device performs analysis processing on the first signal; or may be understood as that the second device demodulates the first signal, to determine the time domain position of the correlation peak. The following describes a demodulation process in detail.

The second device demodulates the first signal to obtain a synchronization sequence having a frequency offset and N reference frequency sequences having frequency offsets. The synchronization sequence having the frequency offset is a sequence obtained by demodulating the first synchronization signal. For example, the first synchronization signal is represented as $s_{sync}(t)$, where $0 < t \le T_{sym}$, and $T_{sym}$ is duration of the first synchronization signal. On this basis, the second device may perform down-conversion on the first synchronization signal based on a low-power local oscillator and a frequency mixer, to obtain a frequency offset synchronization signal. The frequency offset synchronization signal may be represented as $s_{sync}(t)e^{j2\pi f_{offset}t}$, where $f_{offset}$ is a frequency offset of the low-power local oscillator. The second device may sample the frequency offset synchronization signal based on an analog-to-digital converter, to obtain the synchronization sequence having the frequency offset. The synchronization sequence having the frequency offset may be represented as $s_{sync}(n)e^{j2\pi\frac{f_{offset}}{f_s}n}$, where $f_s$ is a sampling frequency of the analog-to-digital converter, $0 < n \leq N_{sym}$, and $N_{sym}$ is a quantity of sampling points of the analog-to-digital converter of the second device. Similarly, the ith reference frequency signal is represented as $e^{j2\pi f_i t}$, where $f_i$ is a frequency of the ith reference frequency signal, $0 < t \leq T_{sym}$, and $T_{sym}$ is duration of the ith reference frequency signal. On this basis, the second device may perform down-conversion on the ith reference frequency signal based on the low-power local oscillator and the frequency mixer, to obtain an ith frequency offset reference frequency signal. The ith frequency offset reference frequency signal may be represented as $e^{j2\pi(f_i+f_{offset})t}$, where $f_{offset}$ is a frequency offset of the low-power local oscillator. The second device may sample the frequency offset synchronization signal based on an analog-to-digital converter, to obtain the synchronization sequence having the frequency offset. The synchronization sequence having the frequency offset may be represented as $s_{sync}(n)e^{j2\pi\frac{f_{offset}}{f_s}n}$, where $f_s$ is a sampling frequency of the analog-to-digital converter, $0 < n \leq N_{sym}$, and $N_{sym}$ is a quantity of sampling points of the analog-to-digital converter of the second device. It may be understood that, for a specific demodulation procedure described in this embodiment of this application, refer to the related descriptions in the foregoing "1. OFDM" and "3. Main link and wake-up link". Details are not described again.

Then, the second device may determine the time domain position of the correlation peak based on the synchronization sequence having the frequency offset, the N reference frequency sequences having the frequency offsets, the first synchronization sequence, and the N reference frequency sequences. Specifically, the second device may first eliminate a frequency offset based on the synchronization sequence having the frequency offset and the N reference frequency sequences having the frequency offsets. For example, the second device multiplies the synchronization sequence having the frequency offset by a conjugate transpose of an ith reference frequency sequence having a frequency offset, to obtain an ith conjugate transpose sequence, that is, a sequence whose frequency offset is eliminated. In this way, the second device then accurately determines the time domain position of the correlation peak based on the first synchronization sequence and the N reference frequency sequences. For example, the second device performs a correlation operation on the ith conjugate transpose sequence, the first synchronization sequence, and an ith reference frequency sequence, to obtain an exact time domain position of the correlation peak.

It should be noted that a conjugate transpose multiplication may be: a sequence obtained after a conjugate of the ith reference frequency sequence having the frequency offset is multiplied by the synchronization sequence having the frequency offset, or a sequence obtained after a conjugate of the synchronization sequence having the frequency offset is multiplied by the ith reference frequency sequence having the frequency offset. For example, the synchronization sequence having the frequency offset is represented as $s_{sync}(n)e^{j2\pi\frac{f_{offset}}{f_s}n}$, and the sequence obtained after the conjugate of the ith reference frequency sequence having the frequency offset is represented as $e^{j2\pi\frac{-(f_i+f_{offset})}{f_s}n}$. The conjugate transpose multiplication is represented as $s_{sync}(n)e^{j2\pi\frac{f_{offset}n}{f_s}}e^{j2\pi\frac{-(f_i+f_{offset})n}{f_s}} = s_{sync}(n)e^{j2\pi\frac{-f_i n}{f_s}}$, that is, impact of the frequency offset is eliminated, so that the time domain position of the correlation peak can subsequently be determined accurately. In addition, there is no restriction on the frequency offset by the conjugate transpose multiplication. This means that even a large frequency offset can also be eliminated.

For ease of understanding, the following separately describes the foregoing parsing process in detail by using examples in which there is one reference frequency signal, there are two reference frequency signals and the two reference frequency signals are located at different time domain positions, and there are two reference frequency signals and the two reference frequency signals are located at a same time domain position.

Case 1: There is one reference frequency signal (denoted as a reference frequency signal 1).

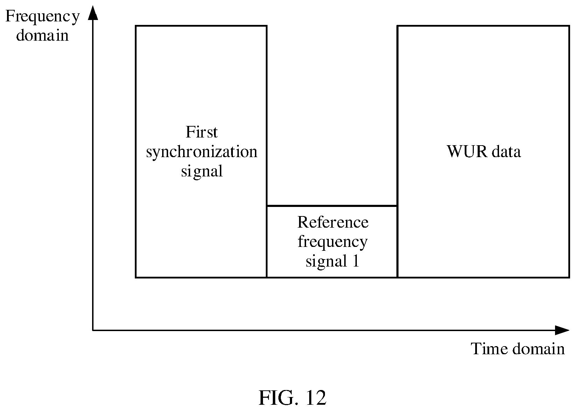

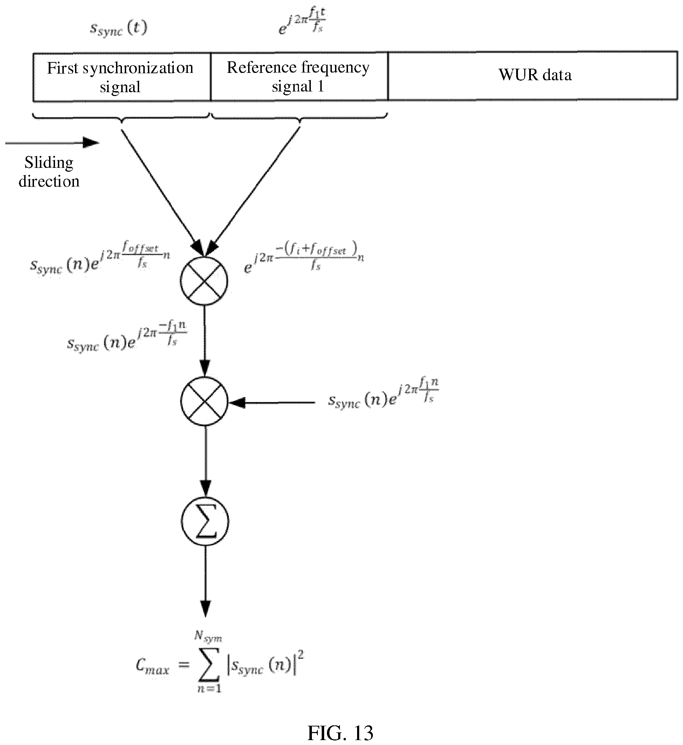

FIG. 12 shows a time-frequency position relationship between the reference frequency signal 1 and the first synchronization signal, and FIG. 13 shows a time domain position relationship between the reference frequency signal 1 and the first synchronization signal. As shown in FIG. 12 and FIG. 13, in signals received by the second device, the reference frequency signal 1 and the first synchronization signal are located at consecutive time domain positions. After performing a down-conversion operation on a received signal, the second device may perform sliding sampling on a down-converted signal based on the digital-to-analog converter. Because the reference frequency signal and the first synchronization signal occupy two time domain positions in total, the second device may use two sliding windows (denoted as a first sliding window and a second sliding window) to perform sliding sampling on the down-converted signal. A length of the first sliding window matches duration of the first synchronization signal, and a length of the second sliding window matches duration of the reference frequency signal 1. A time domain position relationship between the first sliding window and the second sliding window matches the time domain position relationship between the reference frequency signal 1 and the first synchronization signal. For example, a spacing between the first sliding window and the second sliding window is the same as a spacing between the first synchronization signal and the reference frequency signal 1. The first sliding window and the second sliding window are located in consecutive time domain positions.

After performing sampling once based on the first sliding window and the second sliding window, the second device may slide the first sliding window and the second sliding window by one sampling point in a direction indicated by an arrow in FIG. 13, and then perform next sampling. Each sliding sampling based on the first sliding window and the second sliding window means to separately intercept $N_{sym}$ sampling points from corresponding positions in a signal, to obtain respective sampling sequences. An $l^{th}$ sliding is used as an example. A sequence obtained through sampling based on the first sliding window is denoted as a sequence 1, which may be represented as $r_{l,1}(n) = r(l + n)$. A sequence obtained through sampling based on the second sliding window is denoted as a sequence 2, which may be represented as $r_{l,2}(n) = r(l + D + n)$, where $D$ is the spacing between the first sliding window and the second sliding window, for example, $D = N_{sym}$. Then, the second device may multiply the sequence 1 by a conjugate transpose of the sequence 2, to obtain a conjugate transpose sequence, which may be represented as $v(n) = r_{l,1}(n)r_{l,2}^*(n)$. Finally, the second device performs a correlation operation on the conjugate transpose sequence, and a first synchronization sequence and a reference frequency sequence 1 that are pre-stored by the second device, to obtain one correlation value.

The correlation value may be represented as $C(l) = \sum_{n=1}^{N_{sym}} v(n) s_{sync}^*(n) e^{j2\pi \frac{f_1 n}{f_s}}$, where $s_{sync}(n)$ is the first synchronization sequence pre-stored by the second device, and $e^{j2\pi \frac{f_1 n}{f_s}}$ is the reference frequency sequence 1 pre-stored by the second device. In other words, one correlation value is obtained every time one sampling point is slid, and the correlation peak is detected based on the correlation value.

If the first sliding window is slid to a position that coincides with a down-converted first synchronization signal, the second sliding window is slid to a position that coincides with a down-converted reference frequency signal 1. In this case, the sequence 1 obtained through sampling based on the first sliding window is a down-converted first synchronization sequence, that is, the synchronization sequence having the frequency offset, which may be represented as $r_{l,1}(n) = s_{sync}(n) e^{j2\pi \frac{f_{offset} n}{f_s}}$, where $s_{sync}(n)$ is the first synchronization sequence, $f_s$ is a sampling frequency of the analog-to-digital converter of the second device, and $f_{offset}$ is a frequency offset generated by the first synchronization signal in a down-conversion process. The sequence 2 obtained through sampling based on the second sliding window is a down-converted reference frequency sequence 1, that is, a reference frequency sequence 1 having a frequency offset, and may be represented as $r_{l,2}(n) = e^{j2\pi \frac{(f_1 + f_{offset}) n}{f_s}}$, where $f_1$ is a frequency of the reference frequency sequence 1, and $f_{offset}$ is a frequency offset generated by a frequency offset reference frequency signal 1 in the down-conversion process. The second device may multiply the synchronization sequence having the frequency offset by a conjugate transpose of the reference frequency sequence 1 having the frequency offset, to obtain a conjugate transpose sequence. The conjugate transpose sequence may be represented as $v(n) = r_{l,1}(n)r_{l,2}^*(n) = s_{sync}(n) e^{j2\pi \frac{f_{offset} n}{f_s}} e^{j2\pi \frac{-(f_1 + f_{offset}) n}{f_s}} = s_{sync}(n) e^{j2\pi \frac{-f_1 n}{f_s}}$, that is, impact of the frequency offset is eliminated. In this way, the second device performs a correlation operation on the conjugate transpose sequence, and the first synchronization sequence and the reference frequency sequence 1 that are pre-stored by the second device, to obtain a maximum correlation value. The correlation value may be represented as $C_{max} = \sum_{n=1}^{N_{sym}} s_{sync}(n) e^{j2\pi \frac{-f_1 n}{f_s}} s_{sync}^*(n) e^{j2\pi \frac{f_1 n}{f_s}} = \sum_{n=1}^{N_{sym}} |s_{sync}(n)|^2$, where $s_{sync}(n)$ is the first synchronization sequence pre-stored by the second device, and $e^{j2\pi \frac{f_1 n}{f_s}}$ is the reference frequency sequence 1 pre-stored by the second device. In this way, the second device may determine the time domain position of the correlation peak, that is, an aligned position, based on the correlation value, to implement synchronization.

Case 2: There are two reference frequency signals (denoted as a reference frequency signal 1 and a reference frequency signal 2), and the reference frequency signal 1 and the reference frequency signal 2 are located at different time domain positions.

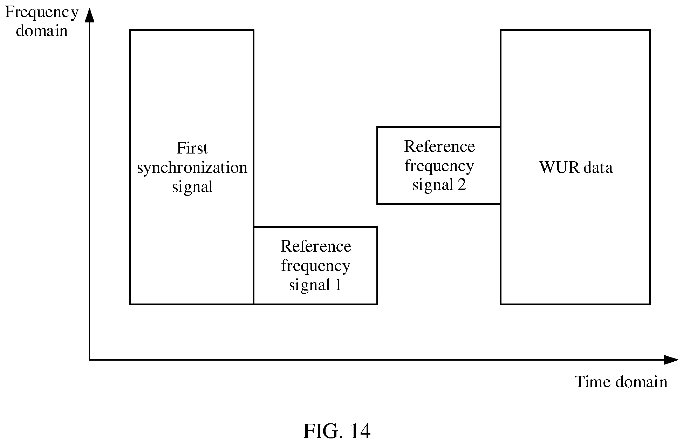

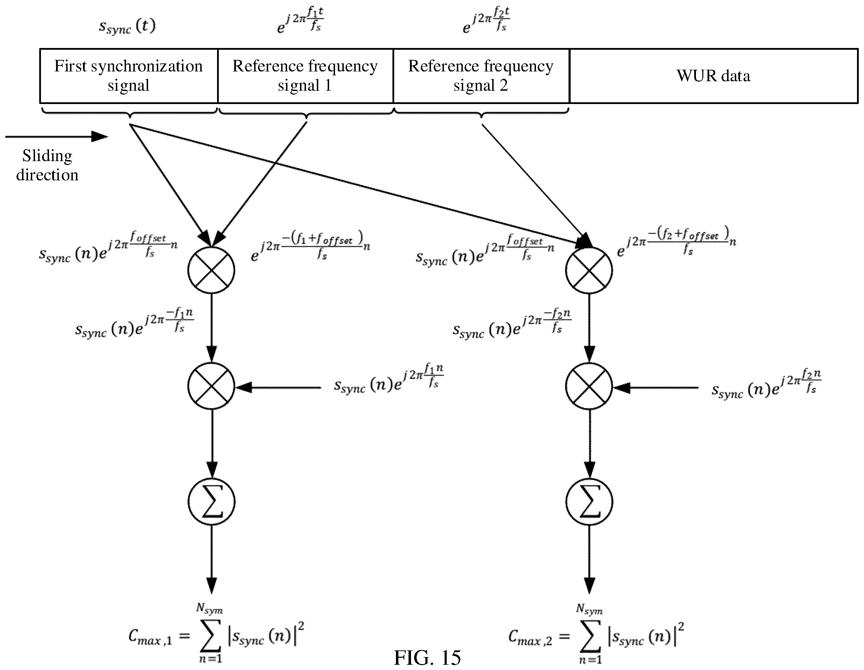

FIG. 14 shows a time-frequency position relationship among the reference frequency signal 1, the reference frequency signal 2, and the first synchronization signal, and FIG. 15 shows a time domain position relationship among the reference frequency signal 1, the reference frequency signal 2, and the first synchronization signal. As shown in FIG. 14 and FIG. 15, in signals received by the second device, the reference frequency signal 1, the reference frequency signal 2, and the first synchronization signal are located at consecutive time domain positions. After performing a down-conversion operation on a received signal, the second device may perform sliding sampling on a down-converted signal based on the digital-to-analog converter. Because the reference frequency signal 1, the reference frequency signal 2, and the first synchronization signal occupy three time domain positions in total, the second device may use three sliding windows (denoted as a first sliding window, a second sliding window, and a third sliding window) to perform sliding sampling on the down-converted signal. A length of the first sliding window matches duration of the first synchronization signal, a length of the second sliding window matches duration of the reference frequency signal 1, and a length of the third sliding window matches duration of the reference frequency signal 3. A time domain position relationship among the first sliding window, the second sliding window, and the third sliding window matches the time domain position relationship among the reference frequency signal 1, the reference frequency signal 2, and the first synchronization signal. For example, a spacing between the first sliding window and the second sliding window is the same as a spacing between the first synchronization signal and the reference frequency signal 1. A spacing between the first sliding window and the third sliding window is the same as a spacing between the first synchronization signal and the reference frequency signal 2. The first sliding window, the second sliding window, and the third sliding window are sequentially located in consecutive time domain positions.

After performing sampling once based on the first sliding window, the second sliding window, and the third sliding window, the second device may slide the first sliding window, the second sliding window, and the third sliding window by one sampling point in a direction indicated by an arrow in FIG. 15, and then perform next sampling. Each sliding sampling based on the first sliding window, the second sliding window, and the third sliding window means to separately intercept $N_{sym}$ sampling points from corresponding positions in a signal, to obtain respective sampling sequences. An $l^{th}$ sliding is used as an example. A sequence obtained through sampling based on the first sliding window is denoted as a sequence 1, which may be represented as $r_{l,1}(n) = r(l + n)$. A sequence obtained through sampling based on the second sliding window is denoted as a sequence 2, which may be represented as $r_{l,2}(n) = r(l + D_1 + n)$, where $D_1$ is the spacing between the first sliding window and the second sliding window, for example, $D_1 = N_{sym}$. A sequence obtained through sampling based on the third sliding window is denoted as a sequence 3, which may be represented as $r_{l,3}(n) = r(l + D_2 + n)$, where $D_2$ is the spacing between the first sliding window and the third sliding window, for example, $D_2 = 2N_{sym}$. Then, the second device multiplies the sequence 1 by a conjugate transpose of the sequence 2, to obtain a conjugate transpose sequence 1, which may be represented as $v_1(n) = r_{l,1}(n)r_{l,2}^*(n)$. The second device multiplies the sequence 1 by a conjugate transpose of the sequence 3, to obtain a conjugate transpose sequence 2, which may be represented as $v_2(n) = r_{l,1}(n)r_{l,3}^*(n)$. Finally, the second device performs a correlation operation on the conjugate transpose sequence 1, and a first synchronization sequence and a reference frequency sequence that are pre-stored by the second device, to obtain one correlation value 1. The correlation value 1 may be represented as

$$C_1(l) = \sum_{n=1}^{N_{sym}} v(n)\, s_{sync}^*(n) e^{j2\pi\frac{f_1 n}{f_s}}$$

, where $s_{sync}(n)$ is the first synchronization sequence pre-stored by the second device, and $e^{j2\pi\frac{f_1 n}{f_s}}$ is a reference frequency sequence 1 pre-stored by the second device. The second device performs a correlation operation on the conjugate transpose sequence 2, and the first synchronization sequence and a reference frequency sequence that are pre-stored by the second device, to obtain one correlation value 2. The correlation value 2 may be represented as $C_2(l) = \sum_{n=1}^{N_{sym}} v(n)\, s_{sync}^*(n) e^{j2\pi\frac{f_2 n}{f_s}}$, where $s_{sync}(n)$ is the first synchronization sequence pre-stored by the second device, and $e^{j2\pi\frac{f_2 n}{f_s}}$ is a reference frequency sequence 2 pre-stored by the second device. In other words, two correlation values may be obtained every time one sampling point is slid, and the correlation peak is detected based on the two correlation values.

If the first sliding window is slid to a position that coincides with a down-converted first synchronization signal, the second sliding window is slid to a position that coincides with a down-converted reference frequency signal 1, and the third sliding window is slid to a position that coincides with a down-converted reference frequency signal 2. In this case, the sequence 1 obtained through sampling based on the first sliding window is a down-converted first synchronization sequence, that is, the synchronization sequence having the frequency offset, which may be represented as

$$r_{l,1}(n) = s_{sync}(n)e^{j2\pi\frac{f_{offset}n}{fs}}$$

, where $s_{sync}(n)$ is the first synchronization sequence, $f_s$ is a sampling frequency of the analog-to-digital converter of the second device, and $f_{offset}$ is a frequency offset generated by the first synchronization signal in a down-conversion process. The sequence 2 obtained through sampling based on the second sliding window is a down-converted reference frequency sequence 1, that is, a reference frequency sequence 1 having a frequency offset, and may be represented as $r_{l,2}(n) = e^{j2\pi\frac{(f_1+f_{offset})n}{fs}}$ , where $f_1$ is a frequency of the reference frequency sequence 1, and $f_{offset}$ is a frequency offset generated by a frequency offset reference frequency signal 1 in the down-conversion process. The sequence 3 obtained through sampling based on the third sliding window is a down-converted reference frequency sequence 2, that is, a reference frequency sequence 2 having a frequency offset, and may be represented as $r_{l,3}(n) = e^{j2\pi\frac{(f_2+f_{offset})n}{fs}}$ , where $f_2$ is a frequency of the reference frequency sequence 2, and $f_{offset}$ is a frequency offset generated by a frequency offset reference frequency signal 2 in the down-conversion process.

The second device may multiply the synchronization sequence having the frequency offset by a conjugate transpose of the reference frequency sequence 1 having the frequency offset, to obtain a conjugate transpose sequence 1. The conjugate transpose sequence 1 may be represented as

$$v_1(n) = r_{l,1}(n)r_{l,2}^*(n) = s_{sync}(n)e^{j2\pi\frac{f_{offset}n}{fs}}e^{j2\pi\frac{-(f_1+f_{offset})n}{fs}} = s_{sync}(n)e^{j2\pi\frac{-f_1 n}{fs}}$$

, that is, impact of the frequency offset is eliminated. The second device may multiply the synchronization sequence having the frequency offset by a conjugate transpose of the reference frequency sequence 2 having the frequency offset, to obtain a conjugate transpose sequence 2. The conjugate transpose sequence 2 may be represented as $v_2(n) = r_{l,1}(n)r_{l,3}^*(n) =$

$$s_{sync}(n)e^{j2\pi\frac{f_{offset}n}{fs}}e^{j2\pi\frac{-(f_2+f_{offset})n}{fs}} = s_{sync}(n)e^{j2\pi\frac{-f_2 n}{fs}}$$ , that is, impact of the frequency offset is also eliminated. In this way, the second device performs a correlation operation on the conjugate transpose sequence 1, and the first synchronization sequence and the reference frequency sequence 1 that are pre-stored by the second device, to obtain one correlation value 1. The correlation value 1 may be represented as $C_{max,1} =$

$$h_1 \sum_{n=1}^{N_{sym}} s_{sync}(n)\, e^{j2\pi\frac{-f_1 n}{fs}} s_{sync}^*(n)e^{j2\pi\frac{f_1 n}{fs}} = \sum_{n=1}^{N_{sym}}\left|s_{sync}(n)\right|^2$$ , where $s_{sync}(n)$ is the first synchronization sequence pre-stored by the second device, and $e^{j2\pi\frac{f_1 n}{fs}}$ is the reference frequency sequence 1 pre-stored by the second device. Similarly, the second device may also perform a correlation operation on the conjugate transpose sequence 2, and the first synchronization sequence and the reference frequency sequence 2 that are pre-stored by the second device, to obtain one correlation value 2. The correlation value 2 may be represented as

$$C_{max,2} = h_2 \sum_{n=1}^{N_{sym}} s_{sync}(n)\, e^{j2\pi\frac{-f_2 n}{fs}} s_{sync}^*(n)e^{j2\pi\frac{f_2 n}{fs}} = \sum_{n=1}^{N_{sym}}\left|s_{sync}(n)\right|^2$$ , where $s_{sync}(n)$ is the first synchronization sequence pre-stored by the second device, and $e^{j2\pi\frac{f_2 n}{fs}}$ is the reference frequency sequence 2 pre-stored by the second device.

In this way, the second device may determine the time domain position of the correlation peak, that is, an aligned position, based on the correlation value 1 and the correlation value 2, to implement synchronization. For example, if the correlation value 1 is greater than a threshold used for detecting the correlation peak, and the correlation value 2 is less than the threshold, the time domain position of the correlation peak is determined based on the correlation value 1. Alternatively, if the correlation value 2 is greater than the threshold, and the correlation value 1 is less than the threshold, the time domain position of the correlation peak is determined based on the correlation value 2. Alternatively, if both the correlation value 1 and the correlation value 2 are greater than the threshold, the time domain position of the correlation peak is determined based on a larger value of the correlation value 1 and the correlation value 2. That the correlation value 1 and the correlation value 2 are equal to the threshold is not limited in this application. For example, when the correlation value 1 is greater than or equal to the threshold, and the correlation value 2 is less than the threshold, the time domain position of the correlation peak may be determined based on the correlation value 1. Alternatively, when the correlation value 1 is greater than the threshold, and the correlation value 2 is less than or equal to the threshold, the time domain position of the correlation peak may be determined based on the correlation value 1. Case 3: There are two reference frequency signals (denoted as a reference frequency signal 1 and a reference frequency signal 2), and the reference frequency signal 1 and the reference frequency signal 2 are located at a same time domain position.

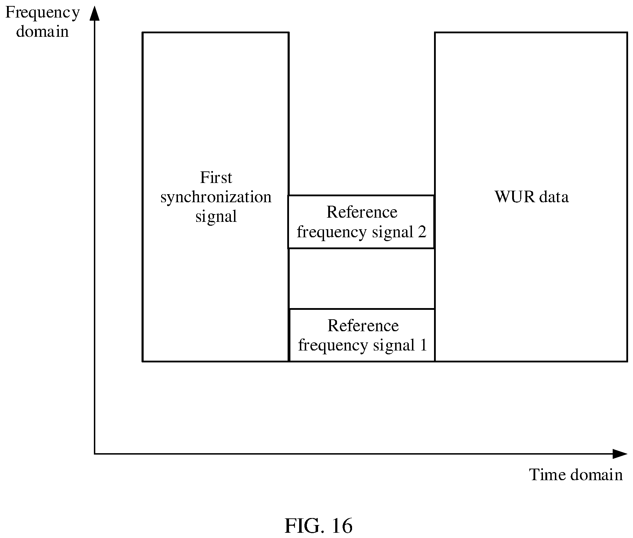

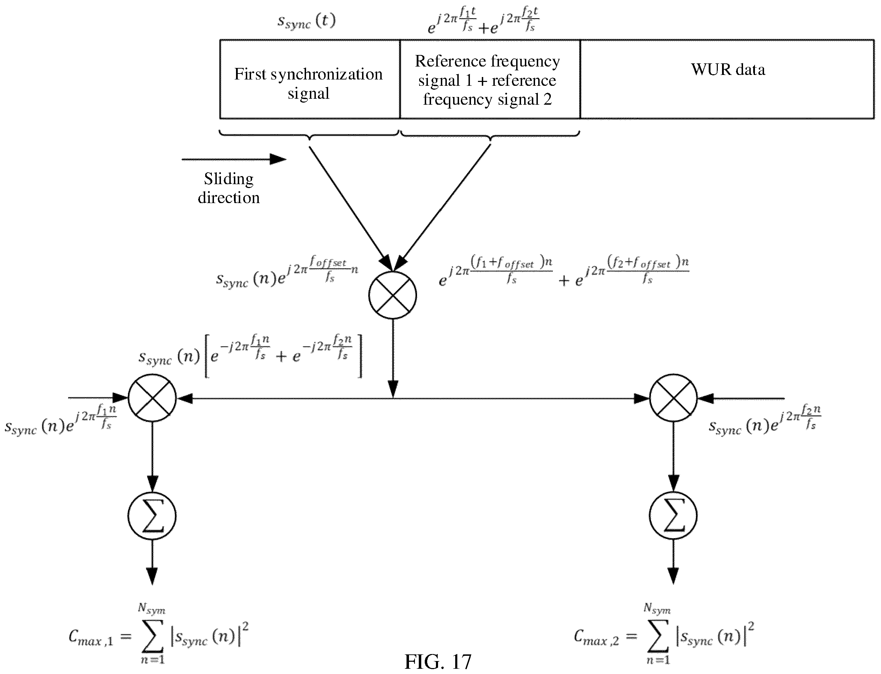

FIG. 16 shows a time-frequency position relationship among the reference frequency signal 1, the reference frequency signal 2, and the first synchronization signal, and FIG. 17 shows a time domain position relationship among the reference frequency signal 1, the reference frequency signal 2, and the first synchronization signal. As shown in FIG. 16 and FIG. 17, in signals received by the second device, the reference frequency signal 1 and the reference frequency signal 2 are located at a same time domain position, and the time domain position is consecutive to a time domain position of the first synchronization signal. After performing a down-conversion operation on a received signal, the second device may perform sliding sampling on a down-converted signal based on the digital-to-analog converter. Because the reference frequency signal 1, the reference frequency signal 2, and the first synchronization signal occupy two time domain positions in total, the second device may use two sliding windows (denoted as a first sliding window and a second sliding window) to perform sliding sampling on the down-converted signal. A length of the first sliding window matches duration of the first synchronization signal, and a length of the second sliding window matches duration of the reference frequency signal 1 and duration of the reference frequency signal 2. A time domain position relationship between the first sliding window and the second sliding window matches the time domain position relationship among the reference frequency signal 1, the reference frequency signal 2, and the first synchronization signal. For example, a spacing between the first sliding window and the second sliding window is the same as a spacing between the first synchronization signal and the reference frequency signal 1. In addition, the spacing between the first sliding window and the second sliding window is also the same as a spacing between the first synchronization signal and the reference frequency signal 2. The first sliding window and the second sliding window are located in consecutive time domain positions.

After performing sampling once based on the first sliding window and the second sliding window, the second device may slide the first sliding window and the second sliding window by one sampling point in a direction indicated by an arrow in FIG. 17, and then perform next sampling. Each sliding sampling based on the first sliding window and the second sliding window means to separately intercept $N_{sym}$ sampling points from corresponding positions in a signal, to obtain respective sampling sequences. An $l^{th}$ sliding is used as an example. A sequence obtained through sampling based on the first sliding window is denoted as a sequence 1, which may be represented as $r_{l,1}(n) = r(l + n)$. A sequence obtained through sampling based on the second sliding window is denoted as a sequence 2, which may be represented as $r_{l,2}(n) = r(l + D_1 + n)$, where $D_1$ is the spacing between the first sliding window and the second sliding window, for example, $D_1 = N_{sym}$. Then, the second device multiplies the sequence 1 by a conjugate transpose of the sequence 2, to obtain a conjugate transpose sequence, which may be represented as $v_1(n) = r_{l,1}(n)r_{l,2}^*(n)$. Finally, the second device performs a correlation operation on the conjugate transpose sequence, and a first synchronization sequence and a reference frequency sequence 1 that are pre-stored by the second device, to obtain one correlation value 1. The correlation value 1 may be represented as $C_1(l) = \sum_{n=1}^{N_{sym}} v(n) s_{sync}^*(n) e^{j2\pi \frac{f_1 n}{fs}}$, where $s_{sync}(n)$ is the first synchronization sequence pre-stored by the second device, and $e^{j2\pi \frac{f_1 n}{fs}}$ is the reference frequency sequence 1 pre-stored by the second device. The second device performs a correlation operation on the conjugate transpose sequence, and the first synchronization sequence and a reference frequency sequence 2 that are pre-stored by the second device, to obtain one correlation value 2. The correlation value 2 may be represented as

$$C_2(l) = \sum_{n=1}^{N_{sym}} v(n) s_{sync}^*(n) e^{j2\pi \frac{f_2 n}{fs}}$$

, where $s_{sync}(n)$ is the first synchronization sequence pre-stored by the second device, and $e^{j2\pi \frac{f_2 n}{fs}}$ is the reference frequency sequence 2 pre-stored by the second device. In other words, two correlation values may be obtained every time one sampling point is slid, and the correlation peak is detected based on the two correlation values.

If the first sliding window is slid to a position that coincides with a down-converted first synchronization signal, the second sliding window is slid to a position that coincides with a down-converted reference frequency signal 1 and a down-converted reference frequency signal 2. In this case, the sequence 1 obtained through sampling based on the first sliding window is a down-converted first synchronization sequence, that is, the synchronization sequence having the frequency offset, which may be represented as $r_{l,1}(n) = s_{sync}(n)e^{j2\pi\frac{f_{offset}n}{f_s}}$, where $s_{sync}(n)$ is the first synchronization sequence, $f_s$ is a sampling frequency of the analog-to-digital converter of the second device, and $f_{offset}$ is a frequency offset generated by the first synchronization signal in a down-conversion process. The sequence 2 obtained through sampling based on the second sliding window is a down-converted reference frequency sequence 1 + a down-converted reference frequency sequence 2, that is, a reference frequency sequence 1 having a frequency offset + a reference frequency sequence 2 having a frequency offset (denoted as a superimposed sequence), which may be represented as $r_{l,2}(n) = e^{j2\pi\frac{(f_1+f_{offset})n}{f_s}} + e^{j2\pi\frac{(f_2+f_{offset})n}{f_s}}$, where $f_1$ is a frequency of the reference frequency sequence 1, $f_2$ is a frequency of the reference frequency sequence 2, and $f_{offset}$ is a frequency offset generated by the reference frequency signal 1 or the reference frequency signal 2 in the down-conversion process.

On this basis, the second device may multiply the synchronization sequence having the frequency offset by a conjugate transpose of the superimposed sequence, to obtain a conjugate transpose sequence. The conjugate transpose sequence may be represented as $v(n) = r_{l,1}(n)r_{l,2}^*(n) = s_{sync}(n)\left[e^{-j2\pi\frac{f_1 n}{f_s}} + e^{-j2\pi\frac{f_2 n}{f_s}}\right]$, that is, the conjugate transpose sequence eliminates impact of the frequency offset. In this way, the second device may perform a correlation operation on the conjugate transpose sequence, and the first synchronization sequence and the reference frequency sequence 1 that are pre-stored by the second device, to obtain one correlation value 1. The correlation value 1 may be represented as $C_{max,1} = \sum_{n=1}^{N_{sym}} s_{sync}(n)s_{sync}^*(n) + s_{sync}(n)s_{sync}^*(n)e^{j2\pi\frac{(f_1-f_2)n}{f_s}}$, where $s_{sync}(n)$ is the first synchronization sequence pre-stored by the second device, and $e^{j2\pi\frac{f_1 n}{f_s}}$ is the reference frequency sequence 1 pre-stored by the second device. Similarly, the second device may also perform a correlation operation on the conjugate transpose sequence, and the first synchronization sequence and the reference frequency sequence 2 that are pre-stored by the second device, to obtain one correlation value 2. The correlation value 2 may be represented as $C_{max,2} = \sum_{n=1}^{N_{sym}} s_{sync}(n)s_{sync}^*(n) + s_{sync}(n)s_{sync}^*(n)e^{j2\pi\frac{(f_2-f_1)n}{f_s}}$, where $s_{sync}(n)$ is the first synchronization sequence pre-stored by the second device, and $e^{j2\pi\frac{f_2 n}{f_s}}$ is the reference frequency sequence 2 pre-stored by the second device. In this way, the second device may also determine the time domain position of the correlation peak based on the correlation value 1 and the correlation value 2. For a specific implementation, refer to the related descriptions in the foregoing "Case 2". Details are not described again.

In conclusion, it can be learned from the method shown in FIG. 9 that the first signal includes the first synchronization signal and the N reference frequency signals, and each reference frequency signal is the signal of the single frequency. In this case, if the first signal is demodulated based on a local oscillator, each reference frequency signal may generate a frequency offset close to that of the first synchronization signal, thereby eliminating the frequency offset of the first synchronization signal. In this way, a device performs a correlation operation by using a synchronization signal without a frequency offset, so that a time domain position of a correlation peak can be accurately determined, thereby completing device synchronization, and ensuring synchronization performance of the device in a sleep state.

Optionally, in a possible design solution, after S902, the communication method according to this embodiment of this application may further include: The first device sends a wake-up signal, and correspondingly, the second device receives the wake-up signal.

The wake-up signal may be carried over a wake-up link, and data in the wake-up signal is used to wake up the second device, to trigger the second device to start a main link and enter a connected state.

The data in the wake-up signal may be carried in a combination of on states or off states of resource units in a resource unit set, and the resource unit set belongs to the first time-frequency resource. It may be understood that, carrying the data based on the combination of the on states or the off states of the resource units may implement resource multiplexing, thereby improving communication efficiency and spectral efficiency. Optionally, the resource unit may occupy at least one OFDM symbol in time, and the resource unit may occupy at least one OFDM subcarrier in frequency.

In other words, a granularity of the resource unit may be selected based on an actual scenario. For example, the resource unit may be an RE or a resource block (resource block, RB), to ensure that the resource unit is applicable to the actual scenario.

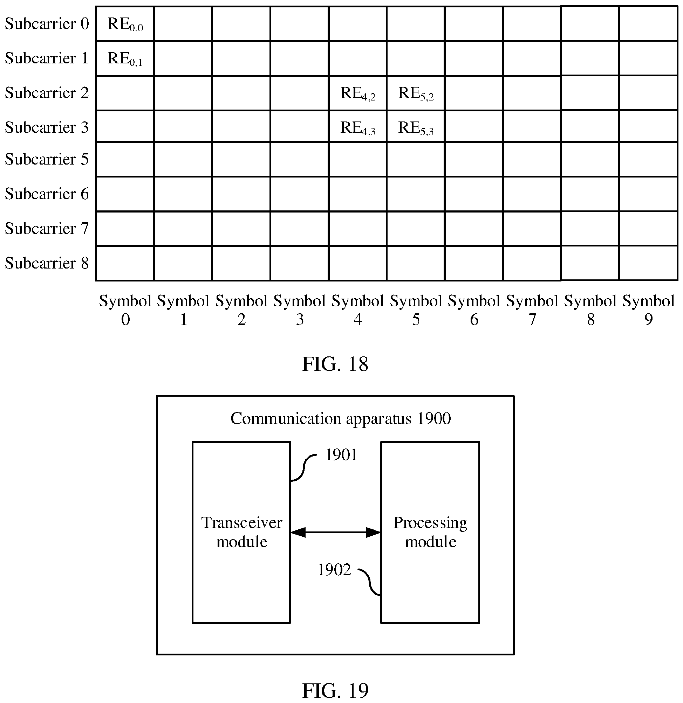

Specifically, in a possible manner, the data in the wake-up signal includes at least one bit (bit), and a combination of on states or off states of every two resource units in the resource unit set is used to transmit one corresponding bit in the at least one bit. For example, there are two combinations of on states or off states of every two resource units. In a first combination, a first resource unit is in an on state, and a second resource unit is in an off state, and the first combination is used to transmit a bit "1". In a second combination, a first resource unit is in an off state, and a second resource unit is in an on state, and the second combination is used to transmit a bit "0", that is, binary on-off keying (on-off keying, OOK) modulation. For ease of understanding, the following uses an example for description. FIG. 18 shows time-frequency domain distribution of the resource unit set. As shown in FIG. 18, the resource unit set includes 80 REs including 10 symbols and 8 subcarriers, and each RE is one resource unit. An $RE_{0,0}$ (which represents an RE including a subcarrier 0 and a symbol 0, and the same applies below) and an $RE_{0,1}$ are used as an example. In a first combination, the $RE_{0,0}$ is in an on state, the $RE_{0,1}$ is in an off state, and a bit 1 is transmitted. In a second combination, the $RE_{0,0}$ is in an off state, the $RE_{0,1}$ is in an on state, and a bit 0 is transmitted. In this case, the second device may determine, based on a resource unit, a value of a corresponding bit by comparing energy of the resource units, and does not need to determine a capability threshold of a single resource unit, thereby reducing complexity of demodulation, which improves operation efficiency of the second device and is more conducive to energy saving.

Alternatively, in another possible manner, the data in the wake-up signal includes at least one bit, and a combination of on states or off states of every two resource unit groups (one resource unit group includes a plurality of resource units) in the resource unit set is used to transmit one corresponding bit in the at least one bit. For example, there are two combinations of on states or off states of every two resource unit groups. In a first combination, all resource units in a first resource unit group are in an on state, and all resource units in a second resource unit group are in an off state, and the first combination is used to transmit a bit "1". In a second combination, all resource units in a first resource unit group are in an off state, and all resource units in a second resource unit group are in an on state, and the second combination is used to transmit a bit "0". For ease of understanding, the following uses an example for description. As shown in FIG. 18, an $RE_{4,2}$ and an $RE_{5,3}$ are one resource unit group, and an $RE_{4,3}$ and an $RE_{5,2}$ are another resource unit group. In a first combination, both the $RE_{4,2}$ and the $RE_{5,3}$ are in an on state, and both the $RE_{4,3}$ and the $RE_{5,2}$ are in an off state, and the first combination is used to transmit the bit "1". In a second combination, both the $RE_{4,2}$ and the $RE_{5,3}$ are in an off state, and both the $RE_{4,3}$ and the $RE_{5,2}$ are in an on state, and the second combination is used to transmit the bit "0". In this case, the second device may determine, based on a resource unit group, a value of a corresponding bit by comparing energy of the resource unit groups, and does not need to determine a capability threshold of a single resource unit, thereby reducing complexity of demodulation, which improves operation efficiency of the second device and is more conducive to energy saving.

The foregoing describes the communication method according to embodiments of this application in detail with reference to FIG. 9 to FIG. 18. The following describes a communication apparatus configured to perform the communication method according to embodiments of this application in detail with reference to FIG. 19 to FIG. 21.

For example, FIG. 19 is a schematic diagram 1 of a structure of a communication apparatus according to an embodiment of this application. As shown in FIG. 19, a communication apparatus 1900 may be used in a first device shown in FIG. 9, and includes various modules configured to perform a function of the first device in the method shown in FIG. 9, for example, includes a transceiver module 1901 and a processing module 1902.

The processing module 1902 is configured to determine a first signal; and the transceiver module 1901 is configured to send the first signal. The first signal is carried on a first time-frequency resource, and the first signal includes a first synchronization signal and N reference frequency signals, where N is a positive integer. Time domain positions of the first synchronization signal and the N reference frequency signals are different, and each of the N reference frequency signals is a signal of a single frequency.

In a possible design solution, at least two of the N reference frequency signals are located at different frequency domain positions.

Optionally, at least two of the N reference frequency signals are located at a same time domain position. Alternatively, at least two of the N reference frequency signals are located at different time domain positions.

Further, at least two of the N reference frequency signals are located at consecutive time domain positions.

In a possible design solution, an $i^{th}$ reference frequency signal in the N reference frequency signals is $e^{j2\pi f_i t}$, where i is any integer ranging from 1 to N, $f_i$ is a frequency of the $i^{th}$ reference frequency signal, $0 < t \le T_{sym}$, and $T_{sym}$ is duration of the $i^{th}$ reference frequency signal.

In a possible design solution, the transceiver module 1901 is further configured to send a wake-up signal after sending the first signal. Data in the wake-up signal is carried in a combination of on states or off states of resource units in a resource unit set, and the resource unit set belongs to the first time-frequency resource.

Optionally, the resource unit occupies at least one orthogonal frequency division multiplexing OFDM symbol in time, and the resource unit occupies at least one OFDM subcarrier in frequency.

Optionally, the transceiver module 1901 may alternatively include a sending module and a receiving module (not shown in FIG. 19). The sending module is configured to implement a sending function of the communication apparatus 1900, and the receiving module is configured to implement a receiving function of the communication apparatus 1900.

Optionally, the communication apparatus 1900 may further include a storage module (not shown in FIG. 19). The storage module stores a program or instructions. When the processing module executes the program or the instructions, the communication apparatus 1900 is enabled to implement the function of the first device in the method shown in FIG. 9.

It should be understood that the processing module included in the communication apparatus 1900 may be implemented by a processor or a processor-related circuit component, and may be a processor or a processing unit. The transceiver module may be implemented by a transceiver or a transceiver-related circuit component, and may be a transceiver or a transceiver unit.

It should be noted that the communication apparatus 1900 may be a terminal or a network device, may be a chip (system) or another component or subassembly that may be disposed in a terminal or a network device, or may be an apparatus including a terminal or a network device. This is not limited in this application.

In addition, for technical effects of the communication apparatus 1900, refer to the corresponding technical effects in the method shown in FIG. 9. Details are not described herein again.

Alternatively, as shown in FIG. 19, a communication apparatus 1900 may be used in a second device shown in FIG. 9, and includes various modules configured to perform a function of the second device in the method shown in FIG. 9, for example, includes a transceiver module 1901 and a processing module 1902.

The transceiver module 1901 is configured to receive a first signal; and the processing module 1902 is configured to parse the first signal. The first signal is carried on a first time-frequency resource, and the first signal includes a first synchronization signal and N reference frequency signals, where N is an integer. Time domain positions of the first synchronization signal and the N reference frequency signals are different, and each of the N reference frequency signals is a signal of a single frequency.

In a possible design solution, at least two of the N reference frequency signals are located at different frequency domain positions.

Optionally, at least two of the N reference frequency signals are located at a same time domain position. Alternatively, at least two of the N reference frequency signals are located at different time domain positions.

Further, at least two of the N reference frequency signals are located at consecutive time domain positions.

In a possible design solution, an $i^{th}$ reference frequency signal in the N reference frequency signals is $e^{j2\pi f_i t}$, where i is any integer ranging from 1 to N, $f_i$ is a frequency of the $i^{th}$ reference frequency signal, $0 < t \leq T_{sym}$, and $T_{sym}$ is duration of the $i^{th}$ reference frequency signal.

In a possible design solution, the processing module 1902 is further configured to: demodulate the first signal to obtain a synchronization sequence having a frequency offset and N reference frequency sequences having frequency offsets; and determine a time domain position of a correlation peak based on the synchronization sequence having the frequency offset, the N reference frequency sequences having the frequency offsets, a first synchronization sequence, and N reference frequency sequences. The synchronization sequence having the frequency offset is a sequence obtained by demodulating the first synchronization signal, an $i^{th}$ reference frequency sequence having a frequency offset in the N reference frequency sequences having the frequency offsets is a sequence obtained by demodulating the $i^{th}$ reference frequency signal in the N reference frequency signals, and i is any integer ranging from 1 to N. The first synchronization sequence is used to obtain the first synchronization signal through modulation, and the N reference frequency sequences are used to obtain the N reference frequency signals through modulation.

Optionally, the processing module 1902 is further configured to: multiply the synchronization sequence having the frequency offset by a conjugate transpose of the $i^{th}$ reference frequency sequence having the frequency offset, to obtain an $i^{th}$ conjugate transpose sequence; and perform a correlation operation on the $i^{th}$ conjugate transpose sequence, the first synchronization sequence, and an $i^{th}$ reference frequency sequence, to determine the time domain position of the correlation peak.

In a possible design solution, the transceiver module 1901 is further configured to receive a wake-up signal after receiving the first signal. Data in the wake-up signal is carried in a combination of on states or off states of resource units in a resource unit set, and the resource unit set belongs to the first time-frequency resource.

Optionally, the resource unit occupies at least one OFDM symbol in time, and the resource unit occupies at least one carrier in frequency.

Optionally, the transceiver module 1901 may alternatively include a sending module and a receiving module (not shown in FIG. 19). The sending module is configured to implement a sending function of the communication apparatus 1900, and the receiving module is configured to implement a receiving function of the communication apparatus 1900.

Optionally, the communication apparatus 1900 may further include a storage module (not shown in FIG. 19). The storage module stores a program or instructions. When the processing module executes the program or the instructions, the communication apparatus 1900 is enabled to implement the function of the second device in the method shown in FIG. 9.

It should be understood that the processing module included in the communication apparatus 1900 may be implemented by a processor or a processor-related circuit component, and may be a processor or a processing unit. The transceiver module may be implemented by a transceiver or a transceiver-related circuit component, and may be a transceiver or a transceiver unit.

It should be noted that the communication apparatus 1900 may be a terminal or a network device, may be a chip (system) or another component or subassembly that may be disposed in a terminal or a network device, or may be an apparatus including a terminal or a network device. This is not limited in this application.

In addition, for technical effects of the communication apparatus 1900, refer to the corresponding technical effects in the method shown in FIG. 9. Details are not described herein again.

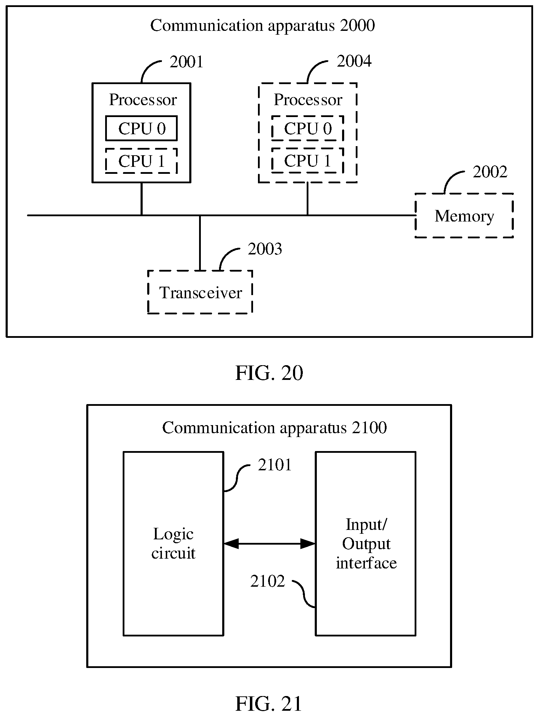

For example, FIG. 20 is a schematic diagram 2 of a structure of a communication apparatus according to an embodiment of this application. The communication apparatus may be a terminal device or a network device, or may be a chip (system) or another component or subassembly that may be disposed in a terminal device or a network device. As shown in FIG. 20, a communication apparatus 2000 may include a processor 2001. Optionally, the communication apparatus 2000 may further include a memory 2002 and/or a transceiver 2003. The processor 2001 is coupled to the memory 2002 and the transceiver 2003, for example, through a communication bus.

The following specifically describes various components of the communication apparatus 2000 with reference to FIG. 20.

The processor 2001 is a control center of the communication apparatus 2000, and may be one processor, may be a collective name of a plurality of processing elements, or may be referred to as a logic circuit. For example, the processor 2001 is one or more central processing units (central processing units, CPUs), may be an application-specific integrated circuit (application specific integrated-circuit, ASIC), or may be one or more integrated circuits configured to implement embodiments of this application, for example, one or more microprocessors (digital signal processor, DSP) or one or more field programmable gate arrays (field programmable gate arrays, FPGAs).

Optionally, the processor 2001 may run or execute a software program stored in the memory 2002 and invoke data stored in the memory 2002, to perform various functions of the communication apparatus 2000.

During specific implementation, in an embodiment, the processor 2001 may include one or more CPUs, for example, a CPU 0 and a CPU 1 shown in FIG. 20.

During specific implementation, in an embodiment, the communication apparatus 2000 may alternatively include a plurality of processors, for example, the processor 2001 and a processor 2004 shown in FIG. 20. Each of the processors may be a single-core (single-CPU) processor or may be a multi-core (multi-CPU) processor. The processor herein may be one or more devices, circuits, and/or processing cores configured to process data (for example, computer program instructions).

The memory 2002 is configured to store a software program for performing the solutions of this application, and is controlled by the processor 2001, so that the method shown in FIG. 9 is performed.

Optionally, the memory 2002 may be a read-only memory (read-only memory, ROM) or another type of static storage device capable of storing static information and instructions, may be a random access memory (random access memory, RAM) or another type of dynamic storage device capable of storing information and instructions, or may be an electrically erasable programmable read-only memory (electrically erasable programmable read-only memory, EEPROM), a compact disc read-only memory (compact disc read-only memory, CD-ROM) or other compact disc storage, optical disc storage (including a compressed optical disc, a laser disc, an optical disc, a digital versatile disc, a Blu-ray disc, or the like), a magnetic disk storage medium or another magnetic storage device, or any other medium capable of carrying or storing expected program code in a form of instructions or data structure and capable of being accessed by a computer, but is not limited thereto. The memory 2002 may be integrated with the processor 2001, or may exist independently and is coupled to the processor 2001 through an interface circuit or an input/output interface (not shown in FIG. 20) of the communication apparatus 2000. This is not specifically limited in embodiments of this application.

The transceiver 2003 is configured to communicate with another communication apparatus. For example, the communication apparatus 2000 is a terminal, and the transceiver 2003 may be configured to communicate with a network device or communicate with another terminal device. For still another example, the communication apparatus 2000 is a network device, and the transceiver 2003 may be configured to communicate with a terminal or communicate with another network device.

Optionally, the transceiver 2003 may include a receiver and a transmitter (not separately shown in FIG. 20). The receiver is configured to implement a receiving function, and the transmitter is configured to implement a sending function.

Optionally, the transceiver 2003 may be integrated with the processor 2001, or may exist independently and is coupled to the processor 2001 through an interface circuit (not shown in FIG. 20) of the communication apparatus 2000. This is not specifically limited in embodiments of this application.

It should be noted that the structure of the communication apparatus 2000 shown in FIG. 20 does not constitute a limitation on the communication apparatus. An actual communication apparatus may include more or fewer components than those shown in the figure, combine some components, or have different component arrangements.

In addition, for technical effects of the communication apparatus 2000, refer to the technical effects of the communication method in the foregoing method embodiments. Details are not described herein again.

For example, FIG. 21 is a schematic diagram 3 of a structure of a communication apparatus according to an embodiment of this application. The communication apparatus may be a terminal device or a network device, or may be a chip (system) or another component or subassembly that may be disposed in a terminal device or a network device. As shown in FIG. 21, a communication apparatus 2100 may include a logic circuit 2101 and an input/output interface 2102. The input/output interface 2102 is configured to receive code instructions and transmit the code instructions to the logic circuit 2101. The logic circuit 2101 is configured to run code instructions to perform the method shown in FIG. 9.

In addition, for technical effects of the communication apparatus 2100, refer to the technical effects of the communication method in the foregoing method embodiments. Details are not described herein again.

An embodiment of this application provides a communication system. The communication system includes the foregoing one or more terminals and one or more network devices.

It should be understood that in embodiments of this application, the processor may be a CPU, or the processor may be another general-purpose processor, a DSP, an ASIC, a fieldprogrammable gate array FPGA or another programmable logic device, a discrete gate or a transistor logic device, a discrete hardware component, or the like. The general-purpose processor may be a microprocessor, or the processor may be any conventional processor, or the like.

It may be understood that the memory in embodiments of this application may be a volatile memory or a non-volatile memory, or may include both a volatile memory and a non-volatile memory. The non-volatile memory may be a ROM, a programmable read-only memory (programmable ROM, PROM), an erasable programmable read-only memory (erasable PROM, EPROM), an EEPROM, or a flash memory. The volatile memory may be a RAM, and serves as an external cache. Through example but not limitative description, many forms of RAMs may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus random access memory (direct rambus RAM, DR RAM).

All or some of the foregoing embodiments may be implemented using software, hardware (for example, a circuit), firmware, or any combination thereof. When software is used for implementation, all or some of the foregoing embodiments may be implemented in a form of computer program product. The computer program product includes one or more computer instructions or computer programs. When the computer instructions, the computer programs, or instructions are loaded and executed on a computer, the procedures or functions according to embodiments of this application are all or partially generated. The computer may be a general-purpose computer, a dedicated computer, a computer network, or another programmable apparatus. The computer instructions may be stored in a computer-readable storage medium or may be transmitted from one computer-readable storage medium to another computer-readable storage medium. For example, the computer instructions may be transmitted from one website, computer, server, or data center to another website, computer, server, or data center in a wired (for example, infrared, radio, microwave, or the like) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid state disk.

It should be understood that the term "and/or" in this specification describes merely an association relationship between associated objects and represents that three relationships may exist. For example, A and/or B may represent the following three cases: Only A exists, both A and B exist, and only B exists. A and B may be singular or plural. In addition, the character "/" in this specification usually indicates an "or" relationship between the associated objects, but may also indicate an "and/or" relationship. For details, refer to the context for understanding.

In this application, "at least one" means one or more, and "a plurality of" means two or more. "At least one of the following items (pieces)" or a similar expression thereof means any combination of these items, including any combination of singular items (pieces) or plural items (pieces). For example, at least one of a, b, or c may indicate: a, b, c, a and b, a and c, b and c, or a, b, and c, where a, b, and c may be singular or plural.

It should be understood that sequence numbers of the foregoing processes do not mean execution sequences in various embodiments of this application. The execution sequences of the processes should be determined based on functions and internal logic of the processes, and should not be construed as any limitation on the implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments according to this application, it should be understood that the disclosed system, apparatus, and method may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one location, or may be distributed on a plurality of network units. Some or all of the units may be selected depending on actual requirements to achieve the objectives of the solutions in embodiments.

In addition, functional units in embodiments of this application may be integrated into one processing unit, each of the units may exist alone physically, or two or more units are integrated into one unit.

When the functions are implemented in a form of software functional unit and sold or used as an independent product, the functions may be stored in a computer-readable storage medium. Based on such an understanding, the technical solutions of this application essentially, or the part contributing to the conventional technology, or some of the technical solutions may be implemented in a form of software product. The computer software product is stored in a storage medium, and includes several instructions for indicating a computing device (which may be a personal computer, a server, or a network device) to perform all or a part of the steps of the methods described in embodiments of this application. The foregoing storage medium includes any medium that can store program code, such as a USB flash drive, a removable hard disk, a ROM, a RAM, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, wherein the method comprises:

   determining, by a first device, a first signal, wherein the first signal comprises a first synchronization signal and N reference frequency signals, N is a positive integer, time domain positions of the first synchronization signal and the N reference frequency signals are different, and each of the N reference frequency signals is a signal of a single frequency; and
   sending, by the first device, the first signal, wherein the first signal is carried on a first time-frequency resource.

2. The method according to claim 1, wherein at least two of the N reference frequency signals are located at different frequency domain positions.

3. The method according to claim 2, wherein at least two of the N reference frequency signals are located at a same time domain position.

4. The method according to claim 2, wherein at least two of the N reference frequency signals are located at different time domain positions.

5. The method according to claim 4, wherein at least two of the N reference frequency signals are located at consecutive time domain positions.

6. The method according to any one of claims 1 to 5, wherein an $i^{th}$ reference frequency signal in the N reference frequency signals is $e^{j2\pi f_i t}$, wherein i is any integer ranging from 1 to N, $f_i$ is a frequency of the $i^{th}$ reference frequency signal, $0 < t \leq T_{sym}$, and $T_{sym}$ is duration of the $i^{th}$ reference frequency signal.

7. The method according to any one of claims 1 to 6, wherein after the sending, by the first device, the first signal, the method further comprises:
sending, by the first device, a wake-up signal, wherein data in the wake-up signal is carried in a combination of on states or off states of resource units in a resource unit set, and the resource unit set belongs to the first time-frequency resource.

8. The method according to claim 7, wherein the resource unit occupies at least one orthogonal frequency division multiplexing OFDM symbol in time, and the resource unit occupies at least one OFDM subcarrier in frequency.

9. A communication method, wherein the method comprises:

receiving, by a second device, a first signal, wherein the first signal is carried on a first time-frequency resource; and the first signal comprises a first synchronization signal and N reference frequency signals, N is an integer, time domain positions of the first synchronization signal and the N reference frequency signals are different, and each of the N reference frequency signals is a signal of a single frequency; and
parsing, by the second device, the first signal.

10. The method according to claim 9, wherein at least two of the N reference frequency signals are located at different frequency domain positions.

11. The method according to claim 10, wherein at least two of the N reference frequency signals are located at a same time domain position.

12. The method according to claim 10, wherein at least two of the N reference frequency signals are located at different time domain positions.

13. The method according to claim 12, wherein at least two of the N reference frequency signals are located at consecutive time domain positions.

14. The method according to any one of claims 9 to 13, wherein an $i^{th}$ reference frequency signal in the N reference frequency signals is $e^{j2\pi f_i t}$, wherein i is any integer ranging from 1 to N, $f_i$ is a frequency of the $i^{th}$ reference frequency signal, $0 < t \leq T_{sym}$, and $T_{sym}$ is duration of the $i^{th}$ reference frequency signal.

15. The method according to any one of claims 9 to 14, wherein the parsing, by the second device, the first signal comprises:

demodulating, by the second device, the first signal to obtain a synchronization sequence having a frequency offset and N reference frequency sequences having frequency offsets, wherein the synchronization sequence having the frequency offset is a sequence obtained by demodulating the first synchronization signal, an $i^{th}$ reference frequency sequence having a frequency offset in the N reference frequency sequences having the frequency offsets is a sequence obtained by demodulating the $i^{th}$ reference frequency signal in the N reference frequency signals, and i is any integer ranging from 1 to N; and
determining, by the second device, a time domain position of a correlation peak based on the synchronization sequence having the frequency offset, the N reference frequency sequences having the frequency offsets, a first synchronization sequence, and N reference frequency sequences, wherein the first synchronization sequence is used to obtain the first synchronization signal through modulation, and the N reference frequency sequences are used to obtain the N reference frequency sequences through modulation.

16. The method according to claim 15, wherein the determining, by the second device, a time domain position of a correlation peak based on the synchronization sequence having the frequency offset, the N reference frequency sequences having the frequency offsets, a first synchronization sequence, and N reference frequency sequences comprises:

multiplying, by the second device, the synchronization sequence having the frequency offset by a conjugate transpose of the $i^{th}$ reference frequency sequence having the frequency offset, to obtain an $i^{th}$ conjugate transpose sequence; and

performing, by the second device, a correlation operation on the $i^{th}$ conjugate transpose sequence, the first synchronization sequence, and the $i^{th}$ reference frequency sequence, to determine the time domain position of the correlation peak.

17. The method according to any one of claims 9 to 16, wherein after the receiving, by a second device, a first signal, the method further comprises:

receiving, by the second device, a wake-up signal, wherein data in the wake-up signal is carried in a combination of on states or off states of resource units in a resource unit set, and the resource unit set belongs to the first time-frequency resource.

18. The method according to claim 17, wherein the resource unit occupies at least one OFDM symbol in time, and the resource unit occupies at least one carrier in frequency.

19. A communication apparatus, wherein the apparatus comprises a module configured to perform the method according to any one of claims 1 to 8.

20. A communication apparatus, wherein the apparatus comprises a module configured to perform the method according to any one of claims 9 to 18.

21. A communication apparatus, wherein the apparatus comprises a processor and a memory; and

the memory is configured to store computer instructions, and when the processor executes the instructions, the communication apparatus is enabled to perform the method according to any one of claims 1 to 18.

22. A computer-readable storage medium, wherein the computer-readable storage medium comprises a computer program or instructions, and when the computer program or the instructions are run on a computer, the computer is enabled to perform the method according to any one of claims 1 to 18.

23. A computer program product, wherein the computer program product comprises a computer program or instructions, and when the computer program or the instructions are run on a computer, the computer is enabled to perform the method according to any one of claims 1 to 18.

24. A communication system, wherein the communication system comprises a first device and a second device, the first device is configured to perform the method according to any one of claims 1 to 8, and the second device is configured to perform the method according to any one of claims 9 to 18.

|  | Symbol 0 | Symbol 1 | Symbol 2 | Symbol 3 | Symbol 4 | Symbol 5 | Symbol 6 | Symbol 7 |
|---|---|---|---|---|---|---|---|---|
| Subcarrier 0 |  |  |  |  |  |  |  |  |
| Subcarrier 1 |  |  |  |  |  |  |  |  |
| Subcarrier 2 |  |  |  |  |  |  |  |  |
| Subcarrier 3 |  |  |  |  |  |  |  |  |

...

|  | Symbol 0 | Symbol 1 | Symbol 2 | Symbol 3 | Symbol 4 | Symbol 5 | Symbol 6 | Symbol 7 |
|---|---|---|---|---|---|---|---|---|
| Subcarrier 510 |  |  |  |  |  |  |  |  |
| Subcarrier 511 |  |  |  |  |  |  |  |  |

FIG. 1

```
┌────────────┐     ┌────────────┐     ┌────────────────┐     ┌────────────┐     ┌────────────┐     ┌────────────┐
│            │     │ Serial-to- │     │                │     │            │     │Parallel-to-│     │ Digital-to-│
│ Modulation │ ──▶ │  parallel  │ ──▶ │Inverse fast    │ ──▶ │Cyclic prefix│ ──▶ │  serial    │ ──▶ │  analog    │
│            │     │ conversion │     │Fourier transform│    │  addition  │     │ conversion │     │ conversion │
└────────────┘     └────────────┘     └────────────────┘     └────────────┘     └────────────┘     └────────────┘
                                                                                                          │
                                                                                                          ▼
                                                                                             Interference ⊕
                                                                                                          │
                                                                                                          ▼
┌────────────┐     ┌────────────┐     ┌────────────┐     ┌────────────────┐     ┌────────────┐
│Fast Fourier│ ◀── │Cyclic prefix│◀── │Parallel-to-│ ◀── │Carrier frequency│◀── │ Analog-to- │
│ transform  │     │  removal   │     │  serial    │     │offset correction│    │  digital   │
│            │     │            │     │ conversion │     │                │     │ conversion │
└────────────┘     └────────────┘     └────────────┘     └────────────────┘     └────────────┘
      │
      ▼
┌────────────┐     ┌────────────┐     ┌────────────┐
│   Phase    │ ──▶ │ Serial-to- │ ──▶ │            │
│  tracking  │     │  parallel  │     │Demodulation│
│            │     │ conversion │     │            │
└────────────┘     └────────────┘     └────────────┘
```

FIG. 2

Receiver

Work on the
wake-up link

Work on the
main link

Wake-up signal

Data signal

Transmitter

**FIG. 3**

Receiver

Main link

Wake up

Wake-up link

Data signal

Wake-up
signal

Transmitter

FIG. 4

| Data signal | Synchronization signal | Data signal |
|---|---|---|

Sliding direction

$$r_l(n) = r(l+n)$$

$s_{sync}(n)$ $\otimes$

$\sum$

$$C(l) = \sum_{n=1}^{N_{sym}} r_l(l+n)\, s_{sync}(n)$$

FIG. 5

Correlation peak

FIG. 6

FIG. 7

Terminal                    Network device

FIG. 8

FIG. 9

| First synchronization signal | Reference frequency signal 1 | Reference frequency signal 2 |
|---|---|---|

Time unit 1            Time unit 2            Time unit 3

(a)

| First synchronization signal | | Reference frequency signal 1 | Reference frequency signal 2 |
|---|---|---|---|

Time unit 1       Time unit 2       Time unit 3       Time unit 4

(b)

FIG. 10

Frequency
domain

Reference
frequency
signal 2

First
synchronization
signal

Reference
frequency
signal 1

Time unit 1    Time unit 2

Time domain

FIG. 11(a)

Frequency
domain

Reference
frequency
signal 2

First
synchronization
signal

Reference
frequency
signal 1

Time unit 1    Time unit 2    Time unit 3

Time domain

FIG. 11(b)

Reference frequency signal 2

Reference frequency signal 1

First synchronization signal

Frequency domain

Time unit 1 | Time unit 2 | Time unit 3

Time domain

FIG. 11(d)

Reference frequency signal 2

Reference frequency signal 1

First synchronization signal

Frequency domain

Time unit 1 | Time unit 2

Time domain

FIG. 11(c)

Reference frequency signal 2

First synchronization signal

Reference frequency signal 1

Frequency domain

Time unit 1 | Time unit 2 | Time unit 3

Time domain

FIG. 11(e)

Frequency
domain

First
synchronization
signal

Reference
frequency
signal 1

WUR data

Time domain

FIG. 12

$s_{sync}(t)$         $e^{j2\pi\frac{f_1 t}{f_s}}$

| First synchronization signal | Reference frequency signal 1 | WUR data |
|---|---|---|

Sliding direction

$s_{sync}(n)e^{j2\pi\frac{f_{offset}}{f_s}n}$     $e^{j2\pi\frac{-(f_i+f_{offset})}{f_s}n}$

$s_{sync}(n)e^{j2\pi\frac{-f_1 n}{f_s}}$

$s_{sync}(n)e^{j2\pi\frac{f_1 n}{f_s}}$

$$C_{max} = \sum_{n=1}^{N_{sym}} \left| s_{sync}(n) \right|^2$$

FIG. 13

FIG. 14

EP 4 429 331 A1

$$s_{sync}(t) \qquad e^{j2\pi\frac{f_1 t}{f_s}} \qquad e^{j2\pi\frac{f_2 t}{f_s}}$$

| First synchronization signal | Reference frequency signal 1 | Reference frequency signal 2 | WUR data |
|---|---|---|---|

Sliding direction

$$s_{sync}(n)e^{j2\pi\frac{f_{offset}}{f_s}n} \qquad e^{j2\pi\frac{-(f_1+f_{offset})}{f_s}n} \qquad s_{sync}(n)e^{j2\pi\frac{f_{offset}}{f_s}n} \qquad e^{j2\pi\frac{-(f_2+f_{offset})}{f_s}n}$$

$$s_{sync}(n)e^{j2\pi\frac{-f_1 n}{f_s}} \qquad s_{sync}(n)e^{j2\pi\frac{-f_2 n}{f_s}}$$

$$s_{sync}(n)e^{j2\pi\frac{f_1 n}{f_s}} \qquad s_{sync}(n)e^{j2\pi\frac{f_2 n}{f_s}}$$

$$C_{max,1} = \sum_{n=1}^{N_{sym}} |s_{sync}(n)|^2 \qquad\qquad C_{max,2} = \sum_{n=1}^{N_{sym}} |s_{sync}(n)|^2$$

FIG. 15

Frequency
domain

First
synchronization
signal

Reference
frequency signal 2

Reference
frequency signal 1

WUR data

Time domain

FIG. 16

$s_{sync}(t)$

$e^{j2\pi\frac{f_1 t}{f_s}} + e^{j2\pi\frac{f_2 t}{f_s}}$

| First synchronization signal | Reference frequency signal 1 + reference frequency signal 2 | WUR data |
|---|---|---|

Sliding direction

$s_{sync}(n)e^{j2\pi\frac{f_{offset}}{f_s}n}$

$e^{j2\pi\frac{(f_1+f_{offset})n}{f_s}} + e^{j2\pi\frac{(f_2+f_{offset})n}{f_s}}$

$s_{sync}(n)\left[e^{-j2\pi\frac{f_1 n}{f_s}} + e^{-j2\pi\frac{f_2 n}{f_s}}\right]$

$s_{sync}(n)e^{j2\pi\frac{f_1 n}{f_s}}$

$s_{sync}(n)e^{j2\pi\frac{f_2 n}{f_s}}$

$C_{max,1} = \sum_{n=1}^{N_{sym}}\left|s_{sync}(n)\right|^2$

$C_{max,2} = \sum_{n=1}^{N_{sym}}\left|s_{sync}(n)\right|^2$

FIG. 17

| | Symbol 0 | Symbol 1 | Symbol 2 | Symbol 3 | Symbol 4 | Symbol 5 | Symbol 6 | Symbol 7 | Symbol 8 | Symbol 9 |
|---|---|---|---|---|---|---|---|---|---|---|
| Subcarrier 0 | $RE_{0,0}$ | | | | | | | | | |
| Subcarrier 1 | $RE_{0,1}$ | | | | | | | | | |
| Subcarrier 2 | | | | | $RE_{4,2}$ | $RE_{5,2}$ | | | | |
| Subcarrier 3 | | | | | $RE_{4,3}$ | $RE_{5,3}$ | | | | |
| Subcarrier 5 | | | | | | | | | | |
| Subcarrier 6 | | | | | | | | | | |
| Subcarrier 7 | | | | | | | | | | |
| Subcarrier 8 | | | | | | | | | | |

FIG. 18

Communication apparatus 1900

Transceiver module ◄──► 1901 Processing module

1902

FIG. 19

Communication apparatus 2000

2001

Processor

CPU 0

CPU 1

2004

Processor

CPU 0

CPU 1

2002

Memory

2003

Transceiver

FIG. 20

Communication apparatus 2100

2101

Logic circuit

2102

Input/ Output interface

FIG. 21

<div align="center">**INTERNATIONAL SEARCH REPORT**</div>

| | International application No. |
|---|---|
| | **PCT/CN2022/136678** |

| A. | CLASSIFICATION OF SUBJECT MATTER |
|---|---|

H04W52/02(2009.01)i

According to International Patent Classification (IPC) or to both national classification and IPC

| B. | FIELDS SEARCHED |
|---|---|

Minimum documentation searched (classification system followed by classification symbols)

IPC:H04W H04L H04B

Documentation searched other than minimum documentation to the extent that such documents are included in the fields searched

Electronic data base consulted during the international search (name of data base and, where practicable, search terms used)

CNPAT, WPI, EPODOC, CNKI, GOOGLE, IEEE, 3GPP: 同步, 信号, 参考频率, 时域, 频域, 解调, 频偏, 休眠, 本地晶振, 相关, 空闲, synchronization, signal, reference frequency, time domain, frequency domain, demodulation, offset, sleep, local oscillator, correlation, idle

| C. | DOCUMENTS CONSIDERED TO BE RELEVANT |
|---|---|

| Category* | Citation of document, with indication, where appropriate, of the relevant passages | Relevant to claim No. |
|---|---|---|
| A | CN 110012524 A (VIVO COMMUNICATION TECHNOLOGY CO., LTD.) 12 July 2019 (2019-07-12) <br> description, paragraphs [0032]-[0050] | 1-24 |
| A | CN 110830206 A (SPREADTRUM COMMUNICATIONS (SHANGHAI) CO., LTD.) 21 February 2020 (2020-02-21) <br> entire document | 1-24 |
| A | CN 111656821 A (QUALCOMM INC.) 11 September 2020 (2020-09-11) <br> entire document | 1-24 |
| A | CN 111937450 A (BEIJING XIAOMI MOBILE SOFTWARE CO., LTD.) 13 November 2020 (2020-11-13) <br> entire document | 1-24 |
| A | US 2019356343 A1 (TELEFONAKTIEBOLAGET LM ERICSSON (PUBL)) 21 November 2019 (2019-11-21) <br> entire document | 1-24 |

☑ Further documents are listed in the continuation of Box C.　　☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **01 February 2023** | **20 February 2023** |

| Name and mailing address of the ISA/CN | Authorized officer |
|---|---|
| **China National Intellectual Property Administration (ISA/CN)** <br> **China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

**INTERNATIONAL SEARCH REPORT**

| International application No. |
|---|
| **PCT/CN2022/136678** |

**C.    DOCUMENTS CONSIDERED TO BE RELEVANT**

| Category* | Citation of document, with indication, where appropriate, of the relevant passages | Relevant to claim No. |
|---|---|---|
| A | US 2020059895 A1 (SONY CORPORATION) 20 February 2020 (2020-02-20)<br>    entire document | 1-24 |
| A | NOKIA et al. "Discussion on time and frequency synchronization for NR over NTN"<br>*3GPP TSG RAN WG1 #105 R1-2104828*, 27 May 2021 (2021-05-27),<br>    entire document | 1-24 |
| A | ERICSSON. "Discussion on V2V Synchronization"<br>*3GPP TSG RAN WG1 Meeting #82bis R1-155912*, 10 October 2015 (2015-10-10),<br>    entire document | 1-24 |

Form PCT/ISA/210 (second sheet) (July 2022)

**INTERNATIONAL SEARCH REPORT**
Information on patent family members

| International application No. |
| --- |
| **PCT/CN2022/136678** |

| Patent document cited in search report | | | Publication date (day/month/year) | Patent family member(s) | | | Publication date (day/month/year) |
| --- | --- | --- | --- | --- | --- | --- | --- |
| CN | 110012524 | A | 12 July 2019 | KR | 20200088886 | A | 23 July 2020 |
| | | | | BR | 112020013668 | A2 | 01 December 2020 |
| | | | | EP | 3737163 | A1 | 11 November 2020 |
| | | | | WO | 2019134643 | A1 | 11 July 2019 |
| | | | | JP | 2021510246 | A | 15 April 2021 |
| | | | | AU | 2019205055 | A1 | 23 July 2020 |
| | | | | US | 2020374821 | A1 | 26 November 2020 |
| | | | | IN | 202027033164 | A | 02 October 2020 |
| CN | 110830206 | A | 21 February 2020 | None | | | |
| CN | 111656821 | A | 11 September 2020 | AU | 2018404869 | A1 | 16 July 2020 |
| | | | | TW | 201933918 | A | 16 August 2019 |
| | | | | EP | 3744128 | A1 | 02 December 2020 |
| | | | | KR | 20200110748 | A | 25 September 2020 |
| | | | | SG | 11202005984 | RA | 28 August 2020 |
| | | | | US | 2019229973 | A1 | 25 July 2019 |
| | | | | JP | 2021511760 | A | 06 May 2021 |
| | | | | KR | 20210128035 | A | 25 October 2021 |
| | | | | WO | 2019147381 | A1 | 01 August 2019 |
| | | | | US | 2021144043 | A1 | 13 May 2021 |
| | | | | BR | 112020014775 | A2 | 08 December 2020 |
| | | | | IN | 202248023048 | A | 06 June 2022 |
| CN | 111937450 | A | 13 November 2020 | WO | 2022006821 | A1 | 13 January 2022 |
| US | 2019356343 | A1 | 21 November 2019 | AU | 2021201555 | A1 | 01 April 2021 |
| | | | | EP | 3764551 | A2 | 13 January 2021 |
| | | | | ZA | 201903471 | B | 25 November 2020 |
| | | | | ES | 2837124 | T3 | 29 June 2021 |
| | | | | CA | 3047613 | A1 | 28 June 2018 |
| | | | | EP | 3556022 | A1 | 23 October 2019 |
| | | | | CO | 2019005989 | A2 | 19 June 2019 |
| | | | | KR | 20190087514 | A | 24 July 2019 |
| | | | | MX | 2019006853 | A | 22 August 2019 |
| | | | | KR | 20210088764 | A | 14 July 2021 |
| | | | | JP | 2020504936 | A | 13 February 2020 |
| | | | | PL | 3556022 | T3 | 19 April 2021 |
| | | | | AU | 2016432856 | A1 | 13 June 2019 |
| | | | | WO | 2018113903 | A1 | 28 June 2018 |
| | | | | RU | 2724635 | C1 | 25 June 2020 |
| | | | | BR | 112019012407 | A2 | 27 February 2020 |
| | | | | US | 2020389190 | A1 | 10 December 2020 |
| | | | | MA | 46139 | A1 | 31 October 2019 |
| US | 2020059895 | A1 | 20 February 2020 | JP | 2020519163 | A | 25 June 2020 |
| | | | | EP | 3602937 | A1 | 05 February 2020 |
| | | | | WO | 2018202883 | A1 | 08 November 2018 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202111480752

- CN 202210044924